# EUROPÄISCHE PATENTSCHRIFT

(11) **EP 3 138 814 B1**
(45) Veröffentlichungstag und Bekanntmachung des Hinweises auf die Patenterteilung: **14.03.2018**
(21) Anmeldenummer: 15183881.0
(22) Anmeldetag: 04.09.2015
(51) Int. Cl.: C01D 1/04, C01D 3/04, C01D 5/02, C02F 9/00, C01D 1/40, C05D 1/02, C05F 3/00, C05F 7/00, C02F 1/469, C01D 7/00, C02F 11/12, C02F 1/52, C02F 1/20, C02F 1/44, C02F 1/66, C02F 11/02, C02F 103/20, C02F 11/04

(54) **VERFAHREN ZUR GEWINNUNG VON ANORGANISCHEN KALIUMSALZEN AUS EINER ANAEROBEN UND/ODER AEROBEN BEHANDLUNG ZUMINDEST TEILWEISE ZUGÄNGLICHEN SUBSTRATEN**
METHOD FOR THE RECOVERY OF INORGANIC POTASSIUM SALTS FROM OF AN ANAEROBIC AND/OR AEROBIC TREATMENT OF AT LEAST PARTIALLY ACCESSIBLE SUBSTRATES
PROCEDE DE PRODUCTION DE SELS DE POTASSIUM ANORGANIQUES PROVENANT D'ANAEROBIES ET/OU TRAITEMENT AEROBIE D'AU MOINS EN PARTIE DE SUBSTRATS ACCESSIBLES

(43) Veröffentlichungstag der Anmeldung: 08.03.2017
(73) Patentinhaber: Fülling, Rainer, 42855 Remscheid (DE); Representa AG, 8008 Zürich (CH)
(72) Erfinder: FÜLLING, Rainer, 42844 Remscheid (DE); LIEBERMANN, Franz, 8706 Feldmeilen (CH)
(74) Vertreter: Leifert & Steffan

(56) Entgegenhaltungen:
- WO-A1-2008/030234
- CN-B- 103 570 043
- US-A1- 2002 158 024
- CHIRAG M. MEHTA ET AL: "Technologies to Recover Nutrients from Waste Streams: A Critical Review", CRITICAL REVIEWS IN ENVIRONMENTAL SCIENCE AND TECHNOLOGY, Bd. 45, Nr. 4, 4. November 2014 (2014-11-04), Seiten 385-427, XP055238278, ISSN: 1064-3389, DOI: 10.1080/10643389.2013.866621
- ZHANG L ET AL: "Enhanced anaerobic digestion of piggery wastewater by ammonia stripping: Effects of alkali types", JOURNAL OF HAZARDOUS MATERIALS, ELSEVIER, AMSTERDAM, NL, Bd. 182, Nr. 1-3, 15. Oktober 2010 (2010-10-15), Seiten 536-543, XP027212036, ISSN: 0304-3894 [gefunden am 2010-06-22]

## Beschreibung

Die vorliegende Erfindung betrifft ein Verfahren zur Gewinnung von anorganischen Kaliumsalzen aus wenigstens einem einer anaeroben und/oder aeroben Behandlung zumindest teilweise zugänglichen Substrat umfassend wenigstens die Schritte (a), (b), (c), (d), (e) und (f), nämlich eine Vorreinigung umfassend die Schritte (a), (b) und (c), d.h. ein Abtrennen von in dem Substrat enthaltenen Feststoffen ((a)), Entfernen von darin enthaltenen stickstoffhaltigen Verbindungen mittels Strippen, wobei der pH-Wert des Substrats vor Durchführung des Strippens durch Zugabe wenigstens eines alkalischen anorganischen Kaliumsalzes auf einen pH-Wert > 9 eingestellt wird ((b)) und anaerobe und/oder aerobe Behandlung des Substrats ((c)), wobei die Reihenfolge von (a), (b) und (c) variabel ist und nach von (a), (b) und (c) eine vorgereinigte Mischung (X) erhalten wird, Behandeln von (X) mittels Nanofiltration unter Erhalt eines Konzentrats (D1) und eines Permeats (D2) ((d)), Behandeln von (D1) mittels Elektrodialyse unter Erhalt eines Konzentrats (E1-K) und eines Diluats (E1-D) und Behandeln von(D2) mittels Elektrodialyse unter Erhalt eines Konzentrats (E2-K) und eines Diluats (E2-D) ((e)), Behandeln von (E1-K) und (E2-K) jeweils unabhängig voneinander mittels Kristallisation nach zumindest teilweisem Einengen der Konzentrate zur Gewinnung von jeweils in (E1-K) und (E2-K) enthaltenen anorganischen Kaliumsalzen, die von den in Schritt (c) eingesetzten alkalischen anorganischen Kaliumsalzen verschieden sind ((f)), wobei die nach Schritt (e) erhältlichen in (E1-K) und/oder (E2-K) enthaltenen gelösten anorganischen Kaliumsalze und/oder die nach Schritt (f) jeweils erhältlichen anorganischen Kaliumsalze zur elektrolytischen Herstellung von den in Schritt (b) verwendeten alkalischen anorganischen Kaliumsalzen eingesetzt werden.

Einer anaeroben und/oder aeroben Behandlung zumindest teilweise zugängliche Substrate wie beispielsweise Klärschlamm, insbesondere aus Abwasser stammender Klärschlamm, Gülle oder Rückständen aus Biogasanlagen, sind dem Fachmann bekannt. Eine anaerobe Behandlung solcher Substrate, die einen anaeroben Abbau durch Mikroorganismen zur Folge hat, ist beispielsweise eine Gärung. Insbesondere steht hier die Methan-Gärung im Vordergrund. Bei der Methan-Gärung werden durch verschiedene in Abhängigkeit voneinander lebende Mikroorganismen am Ende der Abbaukette Methan und Kohlendioxid als Hauptendprodukte gebildet. Das entstehende Gasgemisch wird bekanntermaßen auch als Biogas bezeichnet und hat heutzutage eine deutliche industrielle und wirtschaftliche Relevanz, insbesondere im Sektor der Energieerzeugung. Eine aerobe Behandlung solcher Substrate, die beispielsweise einen aeroben Abbau durch Mikroorganismen unter Verwendung von Sauerstoff zur Folge hat, ist beispielsweise die Kompostierung oder die Nitrifikation. Ein weiteres Beispiel ist die aerobe biologische Behandlung von Abwasser unter Bildung von Bakterienmasse (Überschussschlamm) und Bildung von Kohlendioxid sowie Wasser.
Ein Verfahren zur Gewinnung von Cellulose oder einer Mischung enthaltend wenigstens Cellulose und wenigstens Lignocellulose aus einem solchen, einer Gärung, d.h. einer anaeroben Behandlung, zumindest teilweise zugänglichem Substrat wird in der WO 2015/011275 A1 beschrieben. US2002/0158024 beschreibt die Behandlung von Gülle zur Abtrennung von Kalium, Stickstoff und Phosphor. Dabei wird die anfallende Gülle sofort ohne eine längere Lagerung einer Flokkulation unterworfen und die entstandenen Feststoffe abgetrennt. Durch die sofortige Behandlung wird eine Zersetzung des als Feststoff in der Gülle vorliegenden Kaliumurats verhindert und die Ausbeute an Kalium im Filterkuchen auf 69 % erhöht. Anschließend wird Ammoniak aus dem Filtrat durch Strippen entfernt, wobei der pH-Wert durch die Zugabe von Kalk erhöht werden kann, und das im Filtrat verbliebene Kalium und Ammonium wird danach in einer Zeolithsäule absorbiert.

WO2008/030234 offenbart ein Verfahren zur Entfernung von Ammoniak, Phosphor, Kalium und Erdalkalimetallen aus Abwässern. Dabei werden zunächst die Feststoffe aus einem anaerob behandeltem Abwasser abgetrennt. Anschließend wird Kalk und optional Natriumcarbonat zugegeben, um den pH-Wert zu erhöhen und so die Abtrennung von Ammoniak, Phosphor und anderen Feststoffen zu ermöglichen. Ammoniak kann anschließend in einem Gaswäscher entfernt werden. Außerdem können Ammonium- und Kaliumkationen durch ein lonentauscherharz abgetrennt werden.

Übliche Verfahren zur Reinigung bzw. Aufbereitung von Rückständen aus Biogasanlagen, Gülle oder Kläranlagen wie Klärschlamm, d.h. von einer anaeroben und/oder aeroben Behandlung zumindest teilweise zugänglichen Substraten, umfassen eine Abtrennung der darin enthaltenen Feststoffe beispielsweise mittels mechanischer Filtration, eine biologische Aufreinigung mittels Mikroorganismen (anaerob und/oder aerob mit Abtrennung der Biomasse) und ein Strippen insbesondere zur Entfernung von darin enthaltenen stickstoffhaltigen Verbindungen wie Ammoniak und Aminen, wobei die Reihenfolge dieser Schritte je nach eingesetztem Substrat variieren kann.
Die auf diese Art und Weise erhaltenen vorgereinigten Mischungen enthalten jedoch hohe Salzfrachten, insbesondere hohe Anteile an anorganischen Salzen, insbesondere an anorganischen Alkalimetallsalzen wie anorganischen Natriumsalzen, insbesondere Natriumchlorid, und/oder Kaliumsalzen, insbesondere Kaliumchlorid, Kaliumsulfat und/oder Aphthitalit (Glaserit, K₃Na(SO₄)₂). Aufgrund der Gegenwart dieser Salze in vergleichsweise hohen Anteilen können die bei der Aufarbeitung von beispielsweise Rohschlamm anfallenden Abwässer nicht einfach in Flüsse oder Seen eingespeist werden, da die Mengen der darin enthaltenen Salze die gesetzlich festgelegten Einleitungsgrenzwerte überschreiten. Selbst wenn eine uneingeschränkte Einleitung möglich wäre, so würden die darin enthaltenen Salze, insbesondere die anorganischen Alkalimetallsalze, zudem ungenutzt entsorgt werden: Dies ist aus wirtschaftlicher Sicht jedoch unerwünscht, da neben Natriumsalzen wie Natriumchlorid, welches sich beispielsweise als Industriesalz oder als Streusalz für den Einsatz im Straßenwinterdienst eignet, insbesondere Kaliumsalze wie Kaliumchlorid und auch Kaliumsulfat zur Herstellung von Düngemitteln eingesetzt werden könnten. Es ist daher wünschenswert, wenn solche anorganischen Alkalimetallsalze, insbesondere anorganische Kaliumsalze, aus einer anaeroben und/oder aeroben Behandlung zumindest teilweise zugänglichen Substraten wie Klärschlamm isoliert und wiederverwertet werden könnten, wodurch gleichzeitig die Salzfracht der bei der Aufarbeitung von beispielsweise Klärschlamm anfallenden Abwässer erniedrigt werden würde, wodurch wiederum eine einfachere Entsorgung dieser ermöglicht werden würde.

Bei konventionellen Verfahren zur Reinigung bzw. Aufbereitung von Rückständen aus Biogasanlagen oder Kläranlagen wird das bereits vorstehend genannte Strippen, welches insbesondere zur Entfernung von darin enthaltenen stickstoffhaltigen Verbindungen wie Ammoniak und Aminen dient, üblicherweise in einem alkalischen Medium durchgeführt. Um ein solches alkalisches Medium bereitzustellen, werden üblicherweise alkalische anorganische Natriumsalze wie insbesondere Natriumhydroxid wiederkehrend eingesetzt, d.h. im Fall eines kontinuierlichen Verfahrens fortwährend hinzugegeben. Problematisch daran ist jedoch, dass die Zugabe solcher anorganischer alkalischer Natriumsalze wiederum insgesamt zur Erhöhung der Salzfracht beiträgt, was aus den im vorstehenden Absatz geschilderten Gründen unerwünscht ist. Die Verwendung von Natriumhydroxid hat zudem den Nachteil, dass dadurch insbesondere die Konzentration an Natrium-Ionen erhöht wird und dadurch insgesamt der Anteil an bei der Aufarbeitung anfallenden Natriumsulfat erhöht wird: dies ist jedoch ebenfalls unerwünscht, da die Möglichkeiten der Wiederverwertbarkeit von Natriumsulfat im Vergleich zu anderen anorganischen Alkalimetallsalzen, insbesondere Kaliumsalzen wie Kaliumchlorid, Kaliumsulfat und/oder Aphthitalit wesentlich geringer sind, insbesondere im Hinblick auf die Höhe der anfallenden Menge an Natriumsulfat. Der Einsatz von Kaliumhydroxid anstelle von Natriumhydroxid ist in der Praxis jedoch bislang unerwünscht, da Natriumhydroxid wesentlich preisgünstiger als Kaliumhydroxid ist. Es ist daher wünschenswert, ein Verfahren zur Gewinnung von anorganischen Kaliumsalzen zur Verfügung zu stellen, welches nicht nur eine direkte Wiederverwertbarkeit der gewonnenen anorganischen Kaliumsalze, sondern zudem eine Umwandlung dieser Kaliumsalze beispielsweise mittels elektrolytischer Verfahren in alkalische anorganische Kaliumsalze ermöglicht - wie insbesondere Kaliumhydroxid -, welche dann innerhalb desselben vorzugsweise kontinuierlichen Verfahrens rückgeführt werden und insbesondere innerhalb des Schritts des Strippens als anorganische Base zur Einstellen des pH-Werts eingesetzt werden können: auf diese Weise könnte eine Erhöhung der Salzfracht generell vermieden und insbesondere die Menge an unerwünschtem Natriumsulfat verringert werden und der Kostennachteil des Einsatzes alkalischer anorganischer Kaliumsalze wie Kaliumhydroxid im Vergleich zu Natriumhydroxid könnte zudem durch Umwandlung der isolierten anorganischen Kaliumsalze und Umwandlung dieser in zum Beispiel Kaliumhydroxid umgangen werden. Zudem könnten Kosten eingespart werden, die durch die Beschaffung und den Transport üblicherweise eingesetzten alkalischen anorganischen Natriumsalze generiert werden.

Neben hohen Anteilen an anorganischen Salzen verbleiben auch nach Durchführung der vorstehend genannten üblichen Schritte wie Feststoffabtrennung, biologischer Behandlung und Strippen aber oftmals noch eine Reihe von Verbindungen oder Komponenten in der dann auf diese Weise vorgereinigten Mischung, welche nicht oder zumindest nicht in ausreichendem Maße biologisch abgebaut werden können, nämlich beispielsweise (i) Wirkstoffe aus Arzneimitteln und/oder Pestiziden, (ii) Huminsäuren bzw. huminsäureartige Verbindungen und (iii) sogenannte Schleimstoffe wie Glykosaminoglykane (GAG) oder Mucopolysaccharide. Die Gegenwart der Schleimstoffe kann bei Durchführung weiterer Reinigungsschritte mittels Membranverfahren wie Ultra-, Mikro oder Nano-Filtration oftmals problematisch sein, da diese sich als Membranbeläge auf den jeweils eingesetzten Membranen abscheiden können und somit die Lebensdauer und Wirksamkeit der eingesetzten Membranen verringern bzw. beeinträchtigen können. Die vorstehend genannten insbesondere organischen Verunreinigungen (i) bis (iii) sollten daher während der Abwasserbehandlung zu irgendeinem Zeitpunkt des Verfahrens abgetrennt werden. Eine mögliche Abtrennung stellt das Ausfällen zumindest der organischen Verunreinigungen (i) und (ii) im sauren Medium dar, wobei hierzu anorganische Säuren wie Salz- und/oder Schwefelsäure eingesetzt werden können bzw. werden, da diese Säuren vergleichsweise günstig kommerziell erhältlich sind. Durch Einsatz dieser Säure und insbesondere der darin enthaltenen Chlorid- bzw. Sulfat-Ionen wird jedoch insgesamt die Konzentration solcher Anionen und damit auch der Anteil gelöster anorganischer Salze erhöht: Mit anderen Worten trägt auch der Einsatz von Salz- und/oder Schwefelsäure zur Ausfällung der Verunreinigungen (i) und (ii) zur Erhöhung der Salzfracht insgesamt bei.

Darüber hinaus wird üblicherweise zur Durchführung der Ultra-, Mikro oder Nano-Filtration eine pH-neutrale Mischung eingesetzt. Da beim vorstehend beschriebenen Schritt des Strippen dagegen üblicherweise im alkalischen Medium gearbeitet wird, ist auch aus diesem Grund oftmals die Zugabe von Säure wie anorganischer Säure, insbesondere Salz- und/oder Schwefelsäure, zur Neutralisierung notwendig. Auch hier wird durch Einsatz dieser Säure und insbesondere der darin enthaltenen Chlorid- bzw. Sulfat-Ionen insgesamt die Konzentration solcher Anionen und damit auch der Anteil gelöster anorganischer Salze erhöht. Der Einsatz von Salz- und/oder Schwefelsäure zur Durchführung der Neutralisation vor Durchführung der Ultra-, Mikro oder Nano-Filtration trägt also ebenfalls zur Erhöhung der Salzfracht insgesamt bei.

Es ist daher wünschenswert, ein Verfahren zur Gewinnung von anorganischen Kaliumsalzen wie Kaliumchlorid, Kaliumsulfat und Aphthitalit zur Verfügung zu stellen, was nicht nur eine direkte Wiederverwertbarkeit der gewonnenen anorganischen Kaliumsalze, sondern zudem eine Umwandlung dieser Chlorid- und/oder Sulfat-haltigen Kaliumsalze in anorganische Säuren wie Salzsäure und Schwefelsäure ermöglicht, welche dann innerhalb desselben vorzugsweise kontinuierlichen Verfahrens rückgeführt werden und insbesondere zur Fällung der Verunreinigungen (i) und (ii) eingesetzt werden können: auf diese Weise könnte eine Erhöhung der Salzfracht durch den fortwährenden Einsatz jeweils neuer Salz- und/oder Schwefelsäure zum Zweck der genannten Ausfällung zumindest stark reduziert werden.

Es besteht daher ein Bedarf an einem verbesserten Verfahren, welches die gezielte Abtrennung von anorganischen Kaliumsalzen aus der anaeroben und/oder aeroben Behandlung zumindest teilweise zugänglichen Substraten wie insbesondere aus Abwasser stammendem Klärschlamm, Rückständen aus Biogasanlagen und Gülle ermöglicht, um einerseits die so erhaltenen anorganischen Kaliumsalze ökonomisch wiederverwerten zu können und andererseits die Salzfracht der bei der Abwasseraufbereitung anfallenden Abwässer insgesamt zu verringern und insbesondere von diesen Salzen zumindest weitestgehend zu befreien und so eine einfachere Entsorgung dieser Abwässer zu ermöglichen. Insbesondere besteht ein Bedarf an einem solchen Verfahren, welches die zuvor dargestellten Nachteile bei üblichen Verfahren des Stands der Technik nicht aufweist.

Eine Aufgabe der vorliegenden Erfindung ist es daher, ein Verfahren zur Gewinnung von anorganischen Kaliumsalzen aus einer anaeroben und/oder aeroben Behandlung zumindest teilweise zugänglichen Substraten wie insbesondere aus Abwasser stammendem Klärschlamm, Rückständen aus Biogasanlagen und Gülle zur Verfügung zu stellen. Insbesondere ist es eine Aufgabe der vorliegenden Erfindung, ein solches Verfahren zur Verfügung zu stellen, welches es ermöglicht, die anorganischen Kaliumsalze, aus solchen einer anaeroben und/oder aeroben Behandlung zumindest teilweise zugänglichen Substraten wie insbesondere aus Abwasser stammendem Klärschlamm, Rückständen aus Biogasanlagen und Gülle, abzutrennen, um diese ökonomisch wiederverwerten zu können, beispielsweise als Düngemittel, und gleichzeitig zudem die Salzfracht der bei der Abwasseraufbereitung anfallenden Abwässer insgesamt zu verringern und diese insbesondere von diesen Salzen zumindest weitestgehend zu befreien und so eine einfachere Entsorgung dieser Abwässer zu ermöglichen. Insbesondere ist es eine Aufgabe der vorliegenden Erfindung, die zuvor dargestellten Nachteile bei üblichen Verfahren des Stands der Technik zu verringern bzw. zu umgehen.

Diese Aufgabe wird gelöst durch den in den Patentansprüchen beanspruchten Gegenstand und den in der vorliegenden Beschreibung nachstehend offenbarten bevorzugten Ausführungsformen dieses Gegenstands.

Ein Gegenstand der vorliegenden Erfindung ist daher ein Verfahren zur Gewinnung von anorganischen Kaliumsalzen aus wenigstens einem einer anaeroben und/oder aeroben Behandlung zumindest teilweise zugänglichen Substrat umfassend wenigstens die Schritte (a), (b), (c), (d), (e) und (f), nämlich
eine Vorreinigung umfassend die Schritte (a), (b) und (c):
(a) Abtrennen von in dem wenigstens einen, einer anaeroben und/oder aeroben Behandlung zumindest teilweise zugänglichen Substrat enthaltenen Feststoffen,
(b) Entfernen von in dem wenigstens einen, einer anaeroben und/oder aeroben Behandlung zumindest teilweise zugänglichen Substrat enthaltenen stickstoffhaltigen Verbindungen mittels Strippen, wobei der pH-Wert des Substrats vor Durchführung des Strippens durch Zugabe wenigstens eines alkalischen anorganischen Kaliumsalzes auf einen pH-Wert > 9 eingestellt wird und
(c) anaerobe und/oder aerobe Behandlung des einer anaeroben und/oder aeroben Behandlung zumindest teilweise zugänglichen Substrats,
   wobei die Reihenfolge dieser Schritte (a), (b) und (c) variabel ist und nach Durchführung dieser Schritte (a), (b) und (c) eine vorgereinigte Mischung (X) erhalten wird,
(d) Behandeln der nach Durchführung der Vorreinigungsschritte (a), (b) und (c) erhaltenen vorgereinigten Mischung (X) mittels Nanofiltration unter Erhalt eines Konzentrats (D1) und eines Permeats (D2),
(e) Behandeln des nach Schritt (d) erhaltenen Konzentrats (D1) mittels Elektrodialyse unter Erhalt eines Konzentrats (E1-K) und eines Diluats (E1-D) und Behandeln des nach Schritt (d) erhaltenen Permeats (D2) mittels Elektrodialyse unter Erhalt eines Konzentrats (E2-K) und eines Diluats (E2-D), und
(f) Behandeln der nach Schritt (e) erhaltenen Konzentrate (E1-K) und (E2-K) nach zumindest teilweisem Einengen der Konzentrate jeweils unabhängig voneinander mittels Kristallisation, wobei Schritt (f) jeweils gegebenenfalls ein- oder mehrfach wiederholt wird, zur Gewinnung von jeweils in den Konzentraten (E1-K) und (E2-K) enthaltenen anorganischen Kaliumsalzen, die von den in Schritt (b) eingesetzten alkalischen anorganischen Kaliumsalzen verschieden sind,
dadurch gekennzeichnet, dass die nach Schritt (e) erhältlichen und in den Konzentraten (E1-K) und/oder (E2-K) enthaltenen gelösten anorganischen Kaliumsalze und/oder die nach Schritt (f) jeweils erhältlichen anorganischen Kaliumsalze zur elektrolytischen Herstellung von den in Schritt (b) verwendeten alkalischen anorganischen Kaliumsalzen eingesetzt werden.

Wird die in Schritt (d) eingesetzte vorgereinigte Mischung (X) vor Durchführung der Nanofiltration neutralisiert, beispielsweise durch Einstellen eines pH-Werts im Bereich von 6-8 oder 7±0,25, so wird zur Einstellung dieses pH-Werts vorzugsweise wenigstens eine anorganische Säure ausgewählt aus der Gruppe bestehend aus Salzsäure, Schwefelsäure und Mischungen davon eingesetzt. Vorzugsweise sind in den nach Schritt (e) erhältlichen Konzentraten (E1-K) und (E2-K) Chlorid-Ionen und/oder Sulfat-Ionen enthalten, aufgrund derer Gegenwart die Konzentrate (E1-K) und/oder (E2-K) vorzugsweise zur elektrolytischen Herstellung dieser zur Neutralisation eingesetzten Salzsäure, Schwefelsäure und Mischungen davon, eingesetzt werden.

Es wurde überraschend gefunden, dass es das erfindungsgemäße Verfahren ermöglicht, anorganische Kaliumsalze, insbesondere Kaliumchlorid und Aphthitalit aus wenigstens einem einer anaeroben und/oder aeroben Behandlung zumindest teilweise zugänglichen Substrat wie insbesondere aus Klärschlamm, Gülle und/oder Rückständen aus Biogasanlagen, zu gewinnen und diese Salze somit für eine Vielzahl von Industriezweigen und für eine Vielzahl von Anwendungen nutzbar zu machen, beispielsweise als Düngemittel bzw. zur Herstellung von Düngemitteln.

Insbesondere wurde dabei überraschend gefunden, dass es das erfindungsgemäße Verfahren ermöglicht, anorganische Kaliumsalze, insbesondere Kaliumchlorid, Kaliumsulfat und/oder Aphthitalit in hohen Ausbeuten und/oder hohen Reinheitsgraden, beispielsweise in einer Reinheit im Bereich von 75 bis 95 Gew.-%, zu gewinnen.

Zudem wurde dabei überraschend gefunden, dass es das erfindungsgemäße Verfahren ermöglicht, anorganische Kaliumsalze, insbesondere Kaliumchlorid, Kaliumsulfat und/oder Aphthitalit von ebenfalls in den eingesetzten Substraten enthaltenen anorganischen Natriumsalzen wie Natriumchlorid abzutrennen und es insbesondere zu ermöglichen, dass die in den Substraten enthaltenen anorganischen Alkalimetallsulfatsalze hauptsächlich als Aphthitalit K₃Na(SO₄)₂ zu erhalten, welches aufgrund des nur geringen Na-Gehalts, der bei nur ca. 6,9 Gewichtsprozenten liegt, im Gegensatz zu Natriumsulfat als Düngemittel eingesetzt werden kann.

Ferner wurde überraschend gefunden, dass das erfindungsgemäße Verfahren nicht nur die gezielte Abtrennung von anorganischen Kaliumsalzen aus wenigstens einem einer anaeroben und/oder aeroben Behandlung zumindest teilweise zugänglichen Substrat ermöglicht, sondern auch die Belastung an anorganischen Alkalimetallsalzen von bei einer solchen Aufarbeitung von solchen Substraten anfallenden Abwässern, d.h. deren Salzfracht, zu verringern, und so eine einfachere Entsorgung dieser Abwässer zu ermöglichen, beispielsweise durch eine Einleitung in Gewässer wie Flüsse oder Seen. Insbesondere kann der Salzgehalt solcher Abwässer auf Werte unterhalb der gesetzlich vorgegebenen Einleitungsgrenzen gesenkt werden.

Es wurde zudem überraschend gefunden, dass es das erfindungsgemäße Verfahren ermöglicht, dass die mittels des Verfahrens gewonnenen anorganischen Kaliumsalze, d.h. insbesondere die nach Schritt (e) erhältlichen und in den Konzentraten (E1-K) und/oder (E2-K) enthaltenen gelösten anorganischen Kaliumsalze und/oder die nach Schritt (f) jeweils erhältlichen anorganischen Kaliumsalze zur elektrolytischen Herstellung von den in Schritt (c) verwendeten alkalischen anorganischen Kaliumsalzen eingesetzt werden können, wodurch die Belastung der Abwässer durch anorganische Salze insgesamt nicht weiter erhöht wird, da somit zumindest ein Teil der gewonnenen Salze wieder in den Verfahrenskreislauf rückgeführt werden kann, insbesondere wenn das erfindungsgemäße Verfahren ein kontinuierliches Verfahren ist. Alkalische anorganische Kaliumsalze (oder andere alkalische anorganische Salze wie alkalische anorganische Natriumsalze, die zur Durchführung des Schrittes (c) erforderlich sind, müssen so nicht separat zugesetzt werden - oder zumindest nur ein einziges Mal zugesetzt werden - und tragen so nicht zu einer Salz-Belastung der Abwässer bei, insbesondere wenn das erfindungsgemäße Verfahren ein kontinuierliches Verfahren ist.

Schließlich wurde überraschend gefunden, dass das erfindungsgemäße Verfahren nicht nur eine direkte Wiederverwertbarkeit der gewonnenen anorganischen Kaliumsalze wie Kaliumchlorid und Aphthitalit ermöglicht, sondern zudem eine Umwandlung dieser Chlorid- und/oder Sulfat-haltigen Kaliumsalze in anorganische Säuren wie Salzsäure und Schwefelsäure ermöglicht, welche dann innerhalb desselben vorzugsweise kontinuierlichen Verfahrens rückgeführt werden können und insbesondere zur Fällung der im einleitenden Teil genannten Verunreinigungen (i) und (ii) eingesetzt werden können: auf diese Weise kann eine Erhöhung der Salzfracht durch einen fortwährenden Einsatz jeweils neuer Salz- und/oder Schwefelsäure zur genannten Ausfällung vermieden werden.

Zudem wurde überraschend gefunden, dass - sofern die in Schritt (d) eingesetzte vorgereinigte Mischung (X) vor Durchführung der Nanofiltration durch Zugabe wenigstens einer anorganischen Säure ausgewählt aus der Gruppe bestehend aus Salzsäure, Schwefelsäure und Mischungen davon, neutralisiert wird, beispielsweise durch Einstellen eines pH-Werts im Bereich von 6-8 oder 7±0,25, - die zur Einstellung dieses pH-Werts vorgenannte wenigstens eine anorganische Säure aufgrund der Gegenwart von Chlorid-Ionen und/oder Sulfat-Ionen in den nach Schritt (e) erhältlichen Konzentraten (E1-K) und/oder (E2-K) elektrolytisch aus (E1-K) und (E2-K) herstellbar und so der fortwährende neue Zusatz von Säure vermieden und so ebenfalls eine Erhöhung der Salzfracht vermieden werden kann.

### Substrat

Das erfindungsgemäße Verfahren ermöglicht die Gewinnung von anorganischen Kaliumsalzen aus wenigstens einem, einer anaeroben und/oder aeroben Behandlung zumindest teilweise zugänglichen, Substrat.

Als einer anaeroben und/oder aeroben Behandlung zumindest teilweise zugängliche Substrate können insbesondere alle dem Fachmann im Zusammenhang mit der Gärung als ein Beispiel einer anaeroben Behandlung, insbesondere der Methan-Gärung, und der damit verbundenen Biogasproduktion bekannten Substrate eingesetzt werden. Hierzu gehören insbesondere alle Substrate, die faulbare, beziehungsweise gärbare und/oder aerob abbaubare, organische Verbindungen enthalten. Als Gärung wird bekanntermaßen der anaerobe Abbau von organischen Verbindungen und Komponenten durch Mikroorganismen bezeichnet, das heißt also die Zersetzung von komplexeren, gegebenenfalls polymeren organischen Verbindungen bzw. Komponenten wie Polysacchariden, Fetten und Eiweißen in niedermolekulare Verbindungen wie insbesondere Methan, Kohlendioxid und Wasser sowie auch Ammoniak und Schwefelwasserstoff.

Vorzugsweise liegt das wenigstens eine einer anaeroben und/oder aeroben Behandlung zumindest teilweise zugängliche Substrat, in Form einer wässrigen Mischung vor.

Vorzugsweise ist das wenigstens eine einer anaeroben und/oder aeroben Behandlung zumindest teilweise zugängliche Substrat ausgewählt aus der Gruppe bestehend aus Gras, Mais, Grassilage, Maissilage, Dünnschlempe, Futterrüben, Ganzpflanzsilagen, Grünschnitt, halmgutartige Biomasse, Industrieobst, Jauche, Presskuchen, Rapsextraktionsschrot, Rapskuchen, Rübenblattsilage, Zuckerrüben, Gülle, Bioabfällen und Klärschlamm, vorzugsweise Rohschlamm, insbesondere aus Abwasser oder Abwässern oder aus Rückständen von Biogasanlagen stammender Klärschlamm, vorzugsweise Rohschlamm. Unter "Gülle" wird im Sinne dieser Erfindung vorzugsweise Dünger wie Wirtschaftsdünger, besonders bevorzugt natürlich anfallender Dünger wie Wirtschaftsdünger verstanden, der wenigstens Urin und Kot landwirtschaftlicher Nutztiere beinhaltet. Abhängig von darin enthaltenen Mengen an Einstreu und umfasst der Begriff "Gülle" Dick- oder Dünngülle, Schwemmmist oder Flüssigmist. Insbesondere bevorzugt wird im Rahmen des erfindungsgemäßen Verfahrens als wenigstens ein einer anaeroben und/oder aeroben Behandlung zumindest teilweise zugängliches Substrat ein Substrat eingesetzt, welches ausgewählt ist aus der Gruppe bestehend aus Klärschlamm, Gülle, Rückständen aus Biogasanlagen (sogenannte Gärreste) und Mischungen davon.

### Erfindungsgemäßes Verfahren

Vorzugsweise ist das erfindungsgemäße Verfahren ein Verfahren zur Gewinnung von anorganischen Kaliumsalzen ausgewählt aus der Gruppe umfassend wenigstens Kaliumchlorid, Kaliumsulfat und/oder Aphthitalit (Glaserit; K₃Na(SO₄)₂), besonders bevorzugt ausgewählt aus der Gruppe umfassend wenigstens Kaliumchlorid und/oder Aphthitalit.

Vorzugsweise ermöglicht das erfindungsgemäße Verfahren neben der Gewinnung von anorganischen Kaliumsalzen auch zusätzlich die Gewinnung von anorganischen Natriumsalzen, insbesondere Natriumchlorid. Diese anorganischen Natriumsalze können ebenfalls mittels der Kristallisation gemäß Schritt (f) des erfindungsgemäßen Verfahrens aus den nach Schritt (e) erhaltenen Konzentrate (E1-K) und/oder (E2-K), insbesondere (E2-K), gewonnen werden.

Vorzugsweise ist das erfindungsgemäße Verfahren ein kontinuierliches Verfahren.

Das erfindungsgemäße Verfahren umfasst drei Vorreinigungsschritte, nämlich die Schritte (a), (b) und (c), wobei die Reihenfolge dieser Schritte (a), (b) und (c) variabel ist und nach Durchführung von allen diesen Schritte (a), (b) und (c) eine vorgereinigte Mischung (X) erhalten wird, welche dann in dem nachfolgenden Schritt (d) eingesetzt wird.

Da die Reihenfolge der Schritte (a), (b) und (c) variabel ist, sind insbesondere folgende Varianten der Reihenfolge dieser Schritte zur Vorreinigung umfasst und bevorzugt:
(i) Durchführung der Schritte (a), (b) und (c) nacheinander in dieser Reihenfolge. Die in Schritt (d) eingesetzte vorgereinigte Mischung (X) entspricht dann der nach Schritt (C) erhaltenen Mischung. Diese Reihenfolge ist insbesondere dann bevorzugt, wenn als Substrat Klärschlamm, vorzugsweise Rohschlamm, insbesondere aus Abwasser oder Abwässern stammender Klärschlamm, oder Gülle eingesetzt wird.
(ii) Durchführung der Schritte (c), (a) und (b) nacheinander in dieser Reihenfolge. Die in Schritt (d) eingesetzte vorgereinigte Mischung (X) entspricht dann der nach Schritt (B) erhaltenen Mischung. Diese Reihenfolge ist insbesondere dann bevorzugt, wenn als Substrat Rückstände aus Biogasanlagen eingesetzt wird.
(iii) Durchführung der Schritte (a), (c) und (b) nacheinander in dieser Reihenfolge. Die in Schritt (d) eingesetzte vorgereinigte Mischung (X) entspricht dann ebenfalls wie nach Variante (ii) der nach Schritt (B) erhaltenen Mischung.

### Schritt (a)

Schritt (a) der Vorreinigung innerhalb des erfindungsgemäßen Verfahrens umfasst eine Abtrennung von in dem wenigstens einen, der Gärung zumindest teilweise zugänglichen Substrat enthaltenen Feststoffen unter Erhalt einer Mischung (A). Diese Mischung (A) kann als vorgereinigte Mischung (X) in Schritt (d) eingesetzt werden, sofern Schritt (a) erst nach Schritt (b) und (c) durchgeführt wird.

Vorzugsweise erfolgt die Abtrennung der Feststoffe in Schritt (a) mechanisch, besonders bevorzugt in Form einer mechanischen Separation. Hierfür geeignet ist beispielsweise eine Abtrennung mittels Rechen und/oder Sandfängen. Im Rahmen dieser Separation können die dem Fachmann in diesem Zusammenhang bekannten mechanischen Separationsverfahren eingesetzt werden. Bei diesen Separationsverfahren handelt es sich insbesondere um das Sedimentieren, Zentrifugieren und Filtrieren beziehungsweise Siebfiltrieren, gegebenenfalls in Kombination mit Pressen (Anwendung von Filterpressen). Solche Separationsverfahren sind beispielsweise durch Verwendung gängiger Anlagen und Geräte, wie sie dem Fachmann auf dem Gebiet bekannt sind, durchführbar. Innerhalb vieler dieser Anlagen und Geräte werden auch mehrere der genannten Separationsverfahren beziehungsweise Separationsprinzipien miteinander kombiniert. Einsetzbare Anlagen sind beispielsweise Vakuumbandfilter. Entsprechende Sieb- und Filtrationsanlagen sowie eine entsprechende Auswahl von Sieben und/oder Filtern können vom Fachmann problemlos ausgewählt werden. Auch mittels Ultrafiltration und/oder Mikrofiltration kann eine Abtrennung der Feststoffe gemäß Schritt (a) erfolgen. Dieser Sieb- beziehungsweise Siebfiltrationsschritt kann bevorzugt noch durch eine zusätzlich erfolgende Spülung des Siebrückstands mit Wasser ergänzt werden. Die Abtrennung der Feststoffe gemäß Schritt (a) kann zudem mittels Wendelfilter und/oder Sandfilter erfolgen sowie durch Sedimentation im Absetzbecken. Ein Überblick über einsetzbare Separationsverfahren und Separationsprinzipien ergibt sich aus der allgemeinen Fachliteratur, beispielsweise aus "Technische Mikrobiologie" von Hermann Kretzschmar, Seiten 265 bis 286, (Parey, 1968, ISBN 3489715144) oder auch dem Handbuch "Filters and Filtration Handbook" (Elsevier, Advanced Technology, 4th Edition, ISBN 185617322).

Beispielsweise können Filterpressen, Drehfilteranlagen, Siebtrommelpressen, Bandpressen, Pressschnecken-Separatoren, Zentrifugen verschiedenster Größe und Bauart wie beispielsweise Dekanter (Schneckenaustragszentrifugen), Siebkerbbeziehungsweise Filterzentrifugen, Röhrenzentrifugen, Multikammerzentrifugen oder Düsen- beziehungsweise Tellerseparatoren, Mikrofiltrationsanlagen, Ultrafiltrationsanlagen, Filter wie Sandilfter und/oder Wendelfilter sowie Vakuumbandfilter mit Siebeinlagen eingesetzt werden.

Bevorzugt stellt Schritt (a) des erfindungsgemäßen Verfahrens mindestens ein Separationsverfahren ausgewählt aus der Gruppe der Siebfiltrations- und Zentrifugationsverfahren und Ultrafiltrationsverfahren und/oder Mikrofiltrationsverfahren sowie Verfahren, die die vorgenannten Verfahren miteinander kombinieren, dar. Vorzugsweise erfolgt die Abtrennung in Schritt (a) in Form somit in einer mechanischen Separation, besonders bevorzugt mittels einer Siebfiltration, einer Zentrifugation oder einer kombinierten Siebfiltrationszentrifugation. Bei der Kombination der Verfahren richtet sich die Reihenfolge des Einsatzes der Verfahren maßgeblich nach der Beschaffenheit der zu separierenden Mischung, insbesondere deren Fasergehalt und/oder deren Gelgehalt. Bevorzugt eingesetzt werden hierzu Pressschnecken- Separatoren und/oder Dekanter (Schneckenaustragszentrifugen).

### Schritt (b)

Schritt (b) der Vorreinigung innerhalb des erfindungsgemäßen Verfahrens umfasst ein Entfernen von in dem wenigstens einen, einer anaeroben und/oder aeroben Behandlung zumindest teilweise zugänglichen Substrat enthaltenen stickstoffhaltigen Verbindungen mittels Strippen, wobei der pH-Wert des Substrats vor Durchführung des Strippens durch Zugabe wenigstens eines alkalischen anorganischen Kaliumsalzes auf einen pH-Wert > 9 eingestellt wird, unter Erhalt einer Mischung (B). Diese Mischung (B) kann als vorgereinigte Mischung (X) in Schritt (d) eingesetzt werden, sofern Schritt (b) erst nach Schritt (a) und (c) durchgeführt wird.

Die eingesetzten alkalischen anorganischen Kaliumsalze sind verschieden von den nach Schritt (e) erhältlichen und in den Konzentraten (E1-K) und (E2-K) enthaltenen anorganischen Kaliumsalzen und/oder von den nach Schritt (f) jeweils erhältlichen anorganischen Kaliumsalzen.

Unter dem Begriff "stickstoffhaltige" Verbindungen werden dabei insbesondere organische stickstoffhaltige Verbindungen wie Amine und und/oder Ammoniumsalze und/oder Ammoniak verstanden. Vorzugsweise werden unter diesen stickstoffhaltigen Verbindungen keine anorganischen Nitrat-Salze verstanden, d.h. insbesondere keine stickstoffhaltigen Kalium- und/oder Natriumnitratsalze wie beispielsweise Kaliumnitrat.

Vorzugsweise sind die in Schritt (b) eingesetzten alkalischen anorganischen Kaliumsalze ausgewählt aus der Gruppe bestehend aus Kaliumhydroxid, Kaliumcarbonat, Kaliumhydrogencarbonat und Mischungen davon. Besonders bevorzugt ist Kaliumhydroxid.

Der Fachmann ist mit dem Begriff des "Strippens" vertraut. Beim Strippen (=Austreiben) werden vorzugsweise aus Flüssigkeiten (bevorzugt Wasser in der Abwasserreinigung) Inhaltsstoffe dieser Flüssigkeiten durch das Durchleiten von Gasen (Luft, Wasserdampf, Rauchgas etc.) aus der Flüssigkeit entfernt und in das Gas übergeführt. Die treibende Kraft hinter diesem Prozess ist, dass der Dampfdruck der aus der Flüssigkeit zu entfernenden Stoffe in der Flüssigkeit größer als in dem Gas ist und daher eine Übertritt von der Flüssigkeit in das Gas erfolgt. Die Flüssigkeit wird vorzugsweise im Gegenstrom, d.h. gegen die Fließrichtung des Gases durch eine sogenannte Stripp-Kolonne (eine röhrenförmige Einrichtung mit Einbauten zur Verwirbelung der Strömung) geleitet.

### Schritt (c)

Schritt (c) der Vorreinigung innerhalb des erfindungsgemäßen Verfahrens umfasst eine anaerobe und/oder aerobe Behandlung des einer anaeroben und/oder aeroben Behandlung zumindest teilweise zugänglichen Substrats, unter Erhalt einer Mischung (C). Diese Mischung (C) kann als vorgereinigte Mischung (X) in Schritt (d) eingesetzt werden, sofern Schritt (c) erst nach Schritt (a) und (b) durchgeführt wird. Teil der anaeroben und/oder aeroben Behandlung gemäß Schritt (c) ist vorzugsweise die Durchführung einer Ultrafiltration. Das dabei erhaltene Ultrafiltrationspermeat wird vorzugsweise als Mischung (C) eingesetzt, die wiederum als vorgereinigte Mischung (X) in Schritt (d) eingesetzt werden kann.

Bei der anaeroben Behandlung handelt es sich um ein biologisches Verfahren, welches in Gegenwart von Mikroorganismen durchgeführt wird. Schritt (c) sieht zum Beispiel eine in Faultürmen durchgeführte kontrollierte anaerobe Faulung beziehungsweise Gärung vor. Dabei werden die leicht faulenden Verbindungen durch anaerobe Bakterienkulturen stufenweise zersetzt. Mittels einer ersten Phase, der so genannten Hydrolyse- und Versäuerungsphase, werden die Stoffe durch entsprechende Mikroorganismen hauptsächlich zu kurzkettigen Fettsäure beziehungsweise Carbonsäuren und Alkoholen sowie Wasserstoff und Kohlendioxid umgesetzt. Über die acetogene Phase entsteht letztlich Essigsäure, die dann in der zweiten Stufe, der Methanphase, durch entsprechende Mikroorganismen (Methanbakterien) zu Methan und Kohlendioxid umgesetzt wird. Zudem wird die Umsetzung von Wasserstoff und Kohlendioxid zu Methan und Wasser bewirkt. Neben dem Hauptprodukt Methan, das gezielt abgeführt wird und dann als Biogas-Komponente oder zur generellen Energieerzeugung (Netzeinspeisung) verwendet wird, können im Faulturm beispielsweise auch stickstoffhaltige Verbindungen wie insbesondere Ammoniak beziehungsweise entsprechende Ammoniumsalze entstehen, die gemäß Schritt (b) entfernt werden können. Der nach dem etwa 20-bis 30-tägigen Faulprozess verbleibende so genannte Faulschlamm (stabilisierter Klärschlamm) enthält eine hohe Menge an anorganischen Verbindungen wie anorganischen Alkalimetallsalzen, die im Faulturm nicht oder nur zu einem geringen Anteil umgesetzt bzw. abgebaut werden. Häufig werden auch größere Feststoffpartikel und Agglomerate, die in dem ursprünglichen Rohschlamm vorhanden sind, nur unvollständig zersetzt, obwohl sie die anaerob zersetzbaren Stoffe enthalten. Grund hierfür ist, dass die Angriffsfläche für die anaerobe Umsetzung in solchen Agglomeraten entsprechend klein ist.

Bei der aeroben Behandlung handelt es sich um ein biologisches Verfahren, welches in Gegenwart von Mikroorganismen unter Einwirkung von Sauerstoff, insbesondere Luftsauerstoff, durchgeführt wird.

### Schritt (d)

Schritt (d) des erfindungsgemäßen Verfahrens umfasst eine Behandlung der nach Durchführung der Vorreinigungsschritte (a), (b) und (c) - in beliebiger Reihenfolge - erhaltenen vorgereinigten Mischung (X) mittels Nanofiltration unter Erhalt eines Konzentrats (D1) und eines Permeats (D2).

Vorzugsweise wird die vorgereinigte Mischung (X) vor Durchführung von Schritt (d) einer Mikrofiltration und/oder Ultrafiltration unterworfen, insbesondere wenn Schritt (a) keine solche Mikrofiltration und/oder Ultrafiltration darstellt. Insbesondere wird in diesem Fall das jeweilige bei der Mikrofiltration und/oder Ultrafiltration erhaltene Konzentrat als vorgereinigte Mischung (X) in Schritt (d) eingesetzt.

Vorzugsweise weist das nach Durchführung von Schritt (d) erhaltene Konzentrat (D1) im Vergleich zur im Schritt (d) eingesetzten Mischung (C) eine höhere Menge an Sulfat-Ionen und das nach Durchführung von Schritt (d) erhaltene Permeat (D2) im Vergleich zum gemäß Schritt (d) erhaltenen Konzentrat (D1) eine höhere Menge an Chlorid-Ionen auf.

Der Begriff "Nanofiltration" ist dem Fachmann bekannt, beispielsweise aus dem Fachbuch "Membranverfahren" von Thomas Melin und Robert Rautenbach, Springer Verlag, 2. Auflage, 2004 (Punkt 10.: Nanofiltration).

Vorzugsweise wird Schritt (d) des erfindungsgemäßen Verfahrens bei der Temperatur durchgeführt, die die vorgereinigte Mischung (X) nach Durchführung der Schritt (a), (b) und (c) aufweist. Insbesondere beinhaltet Schritt (d) keine Kühlung der vorgereinigten Mischung (X). Vorzugsweise weist die vorgereinigte Mischung (X) eine Temperatur im Bereich von 5 bis 60°C oder von 5 bis 58°C, besonders bevorzugt von 10 bis 50°C oder von 20 bis 50°C, insbesondere von 20 bis 45°C, am meisten bevorzugt von 20 bis 35°C, auf, bei der Schritt (d) entsprechend durchgeführt wird. Vorzugsweise wird Schritt (d) bei einem pH-Wert der vorgereinigten Mischung von 6 bis 8, besonders bevorzugt bei pH7±0,25 durchgeführt.

In Schritt (d) des erfindungsgemäßen Verfahrens wird zur Durchführung der Nanofiltration eine Nanofiltrationsmembran eingesetzt. Jede handelsübliche Nanofiltrationsmembran (NF-Membran) eignet sich hierfür. Vorzugsweise sind solche handelsüblichen NF-Membranen im Wesentlichen durchlässig für einwertige Ionen wie Chlorid-Ionen, jedoch im Wesentlichen undurchlässig für zweiwertige Ionen wie Sulfat-Ionen. Vorzugsweise werden zweiwertige Ionen wie Sulfat-Ionen zu wenigstens 80%, besonders bevorzugt zu wenigstens 90%, jeweils bezogen auf die Gesamtmenge der in der Mischung (X) enthaltenen Sulfat-Ionen durch die eingesetzte NF-Membran zurückgehalten. Vorzugsweise werden einwertige Ionen wie Chlorid-Ionen zu wenigstens 50 oder zu wenigstens 55%, jeweils bezogen auf die Gesamtmenge der in der Mischung (X) enthaltenen Chlorid-Ionen durch die eingesetzte NF-Membran durchgelassen. Die sogenannte "Trenngrenze" der eingesetzten NF-Membran liegt vorzugsweise bei <200 Dalton.

Vorzugsweise wird in Schritt (d) zumindest teilweise eine NF-Membran eingesetzt, die auf Polysulfonen als Trägermaterial basiert, welches vorzugsweise zumindest teilweise beschichtet ist, besonders bevorzugt zumindest teilweise mit wenigstens einem Polyamid-Homo- oder Copolymeren. Daneben können noch gegebenenfalls andere übliche NF-Membranen eingesetzt werden.

Schritt (d) wird vorzugsweise innerhalb einer Nanofiltrationsanlage durchgeführt, die aus drei Einheiten pro Modul, d.h. pro Druckrohr, besteht. Vorzugsweise ist jede Einheit ca. 1 m lang und weist einen Durchmesser von ca. 20 cm auf. Jede Einheit hat vorzugsweise eine Wirkfläche von 30 bis 40 m², vorzugsweise von 34 bis 38 m². Vorzugsweise werden die vorstehend genannten organischen Verunreinigungen (iii) an der NF-Membran abgetrennt, d.h. diese scheiden sich an der NF-Membran ab.

Vorzugsweise erfolgt Schritt (d) im sogenannten Crossflow-Modus, der eine vergleichsweise hohe Überströmung der NF-Membran vorsieht, um einer möglichen Konzentrationspolarisation entgegen zu wirken.

Bei der Durchführung von Schritt (d) kann der sogenannte Donnan-Effekt ausgenutzt werden. Dieser ist dem Fachmann bekannt (vgl. Fachbuch "Membranverfahren" von Thomas Melin und Robert Rautenbach, Springer Verlag, 2. Auflage, 2004 (Punkt 10.4: Donnan-Effekt).

Vorzugsweise enthält das nach Schritt (d) des erfindungsgemäßen Verfahrens erhältliche Permeat (D2) keine organischen Verunreinigungen, insbesondere keine organischen Verunreinigungen ausgewählt aus der Gruppe bestehend aus (i) Wirkstoffe aus Arzneimitteln oder Pestiziden, (ii) Huminsäuren und/oder huminsäureartigen Verbindungen und (iii) Schleimstoffen wie Glykosaminoglykane (GAG) und/oder Mucopolysaccharide.

Vorzugsweise wird vor Durchführung des Schrittes (d) vorzugsweise durch Zugabe wenigstens einer anorganischen Säure zur der nach Durchführung der Vorreinigungsschritte (a), (b) und (c) - in beliebiger Reihenfolge - erhaltenen vorgereinigten Mischung (X) ein pH-Wert im Bereich von 3 bis 8, oder 4 bis 8 oder 6 bis 8, insbesondere 5 bis 7, besonders bevorzugt von pH7±0,25 eingestellt. Vorzugsweise ist die hierfür eingesetzte anorganische Säure ausgewählt aus der Gruppe bestehend aus Salzsäure, Schwefelsäure und Mischungen davon. Vorzugsweise werden die nach Schritt (e) erhältlichen und in den Konzentraten (E1-K) und (E2-K) enthaltenen gelösten anorganischen Kaliumsalze und/oder die nach Schritt (f) jeweils erhältlichen anorganischen Kaliumsalze zur elektrolytischen Herstellung der in diesem Schritt verwendeten anorganischen Säuren eingesetzt. Dies ist möglich aufgrund der jeweils in (E1-K) und (E2-K) enthaltenen Chlorid- und Sulfat-Ionen.

### Optionaler Schritt (d-1)

Vorzugsweise wird das nach Durchführung von Schritt (d) erhaltene Permeat (D2) vor Durchführung der Elektrodialyse gemäß Schritt (e), die nachfolgend näher beschrieben wird, einem Schritt (d-1) unterworfen, nämlich
(d-1) Behandeln des Permeats (D2) mittels einer Membranfiltrationstechnik, vorzugsweise mittels Umkehrosmose oder Nanofiltration, besonders bevorzugt mittels Umkehrosmose, unter Erhalt eines Konzentrats (D2-K) und eines Permeats (D2-P), wobei das Konzentrat (D2-K) in diesem Fall im nachfolgenden Schritt (e) anstelle des Permeats (D2) eingesetzt wird.

Der Begriff "Umkehrosmose" ist dem Fachmann bekannt. Dabei handelt es sich um einen Verfahrensschritt zur (Auf)konzentrierung von in Flüssigkeiten oder Mischungen gelösten Stoffen, bei der mittels Einwirkung von Druck der natürliche Osmose-Prozess umgekehrt wird. Dabei ist das Medium, in dem die Konzentration einer bestimmten Komponente verringert werden soll, durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Komponenten weniger konzentriert vorliegen.

Vorzugsweise wird nach Durchführung von Schritt (d) und vor Durchführung von Schritt (e) das nach Schritt (d) erhaltene Permeat (D2) in einem solchen Schritt (d-1) weiter (auf)konzentriert. Dies kann mittels eines geeigneten Membranverfahrens erfolgen wie beispielsweise einer Nanofiltration oder einer Umkehrosmose. Vorzugsweise wird das Permeat (D2) mittels Umkehrosmose behandelt, wobei nach Durchführung einer solchen Umkehrosmose ein Konzentrat (D2-K) und ein Permeat (D2-P) erhalten werden. Wird ein solcher Schritt (d-1) durchgeführt, wird vorzugsweise das dabei erhaltene Konzentrat (D2-K) anstelle des Permeats (D2) im Schritt (e) des erfindungsgemäßen Verfahrens eingesetzt. Das erhältliches Permeat (D2-P) kann verworfen werden, bzw. kann als salzarmes Wasser eingeleitet werden.

### Schritt (e)

Schritt (e) des erfindungsgemäßen Verfahrens umfasst eine Behandlung des nach Schritt (d) erhaltenen Konzentrats (D1) mittels Elektrodialyse unter Erhalt eines Konzentrats (E1-K) und eines Diluats (E1-D) und eine Behandlung des nach Schritt (d) erhaltenen Permeats (D2) mittels Elektrodialyse unter Erhalt eines Konzentrats (E2-K) und eines Diluats (E2-D).

Der Begriff "Elektrodialyse" ist dem Fachmann bekannt, beispielsweise aus dem Fachbuch "Handbuch der Abwasser- und Recyclingtechnik" von Ludwig Hartinger, Carl Hanser Verlag, 2. Auflage, 1991 (Punkt 7.6.3 auf den Seiten 523-532). Auch der Aufbau und der Betrieb von Elektrodialyseanlagen ist dem Fachmann bekannt, beispielsweise aus dem Fachbuch "Membranverfahren" von Thomas Melin und Robert Rautenbach, Springer Verlag, 2. Auflage, 2004 (Punkt 12.3 auf den Seiten 367-374).

Vorzugsweise sind im nach Schritt (e) erhaltenen Konzentrat (E1-K) im Wesentlichen Sulfat-Ionen als Anionen sowie Kalium-Ionen (und Natrium-Ionen) als Kationen enthalten. Vorzugsweise ist das nach Schritt (e) erhaltene Konzentrat (E1-K) an gelöstem Natriumchlorid verarmt, d.h. es enthält eine wesentlich geringere Menge an gelöstem Natriumchlorid als das ebenfalls nach Schritt (e) erhaltene Konzentrat (E2-K). Die im Konzentrat (E1-K) enthaltenen Sulfat-Ionen und Kalium-Ionen (sowie Natrium-Ionen) können im nachfolgenden Schritt (f) in Form von Aphthitalit (K₃Na(SO₄)₂) gewonnen werden. Aus Mischungen, in denen Sulfat-Ionen und Kalium-Ionen sowie Natrium-Ionen vorliegen, wird üblicherweise überwiegend Aphthitalit (K₃Na(SO₄)₂), d.h. ein gemischtes Doppelsulfatsalz erhalten und nicht reines Kaliumsulfat und/oder Natriumsulfat (vgl. US Patent Nr. 1,936,070). Geringe Anteile an Kaliumsulfat können darin enthalten sein.

Vorzugsweise sind im nach Schritt (e) erhaltenen Konzentrat (E2-K) im Wesentlichen Chlorid-Ionen als Anionen sowie Kalium-Ionen (und Natrium-Ionen) als Kationen enthalten. Vorzugsweise ist das nach Schritt (e) erhaltene Konzentrat (E2-K) reich an Chlorid-Ionen, d.h. es enthält eine wesentlich höhere Menge an gelöstem Natriumchlorid als das ebenfalls nach Schritt (e) erhaltene Konzentrat (E1-K). Die im Konzentrat (E2-K) enthaltenen Chlorid-Ionen und Kalium-Ionen können im nachfolgenden Schritt (f) in Form von Kaliumchlorid (KCl) gewonnen werden. Dabei kann eine Abtrennung von KCl mittels des Sylvinit-Verfahrens erfolgen (vgl. Fachbuch der Chemischen Technologie, Winnacker und Küchler, Band 2, Anorganische Technologie 1, Carl Hanser Verlag, 4. Auflage, 1982, Kapitel 3.34, Seiten 288 bis 294).

Der Begriff "im Wesentlichen" im Zusammenhang mit dem im Konzentrat (E1-K) enthaltenen Sulfat-Ionen als Anionen sowie Kalium-Ionen (und Natrium-Ionen) als Kationen bedeutet im Sinne der vorliegenden Erfindung vorzugsweise, dass wenigstens 70 Gew.-%, vorzugsweise wenigstens 80 Gew.-%, besonders bevorzugt wenigstens 85 Gew.-%, ganz besonders bevorzugt wenigstens 90 Gew.-%, der im Konzentrat (E1-K) Anionen Sulfat-Ionen sind bzw. dass wenigstens 70 Gew.-%, vorzugsweise wenigstens 80 Gew.-%, besonders bevorzugt wenigstens 85 Gew.-%, ganz besonders bevorzugt wenigstens 90 Gew.-%, der im Konzentrat (E1-K) Kationen Kalium-Ionen (und Natrium-Ionen) sind.

Der Begriff "im Wesentlichen" im Zusammenhang mit dem im Konzentrat (E2-K) enthaltenen Chlorid-Ionen als Anionen sowie Kalium-Ionen (und Natrium-Ionen) als Kationen bedeutet im Sinne der vorliegenden Erfindung vorzugsweise, dass wenigstens 70 Gew.-%, vorzugsweise wenigstens 80 Gew.-%, besonders bevorzugt wenigstens 85 Gew.-%, ganz besonders bevorzugt wenigstens 90 Gew.-%, der im Konzentrat (E2-K) Anionen Chlorid-Ionen sind bzw. dass wenigstens 70 Gew.-%, vorzugsweise wenigstens 80 Gew.-%, besonders bevorzugt wenigstens 85 Gew.-%, ganz besonders bevorzugt wenigstens 90 Gew.-%, der im Konzentrat (E2-K) Kationen Kalium-Ionen (und Natrium-Ionen) sind.

Vorzugsweise enthält insbesondere das Konzentrat (E2-K) neben den darin enthaltenen gelösten anorganischen Kaliumsalzen zudem gelöste anorganische Natriumsalze, insbesondere Natriumchlorid. Vorzugsweise enthält auch das Konzentrat (E1-K) neben den darin enthaltenen gelösten anorganischen Kaliumsalzen zudem gelöste anorganische Natriumsalze, insbesondere Natriumchlorid, jedoch ist die darin enthaltene Menge an gelösten anorganischen Natriumsalzen kleiner als im Fall von Konzentrat (E2-K).

Das nach Schritt (e) des erfindungsgemäßen Verfahrens erhältliche Diluat (E1-D) enthält nach Durchführung der Elektrodialyse gemäß Schritt (e) - sofern im ursprünglich eingesetzten Substrat vorhanden - organische Verunreinigungen, insbesondere organischen Verunreinigungen ausgewählt aus der Gruppe bestehend aus (i) Wirkstoffe aus Arzneimitteln oder Pestiziden und (ii) Huminsäuren und/oder huminsäureartigen Verbindungen. Diese können gegebenenfalls im nachfolgend beschriebenen optionalen Schritt (h) abgetrennt werden, vorzugsweise durch Säurefällung unter Erhalt des Filtrats (E1-D-K-F).

### Schritt (f)

Schritt (f) des erfindungsgemäßen Verfahrens umfasst ein Behandeln der nach Schritt (e) erhaltenen Konzentrate (E1-K) und (E2-K) nach zumindest teilweisem Einengen der Konzentrate jeweils unabhängig voneinander mittels Kristallisation, wobei Schritt (f) jeweils gegebenenfalls ein- oder mehrfach wiederholt wird, zur Gewinnung von jeweils in den Konzentraten (E1-K) und (E2-K) enthaltenen gelösten anorganischen Kaliumsalzen, die von den in Schritt (c) eingesetzten alkalischen anorganischen Kaliumsalzen verschieden sind.

Vorzugsweise beinhaltet die Kristallisation gemäß Schritt (f) jeweils wenigstens drei Stufen (f1), (f2) und (f3).

Die Stufe (f1) sieht ein
(f1) Einengen der nach Schritt (e) erhaltenen Konzentrate (E1-K) und (E2-K) jeweils unabhängig voneinander bei einer Temperatur im Bereich von 75°C bis zum Siedepunkt der Konzentrate (E1-K) und (E2-K) vor, wobei in (E2-K) enthaltenes anorganisches Natriumsalz, insbesondere Natriumchlorid, während der Durchführung von (f1) bei dieser Temperatur zumindest teilweise ausfällt und in (E1-K) enthaltenes anorganisches Natriumsalz, insbesondere Natriumchlorid, während der Durchführung von (f1) bei dieser Temperatur gegebenenfalls zumindest teilweise ausfällt, und wobei die Stufe (f1) solange durchgeführt wird, bis die jeweils darin enthaltenen bis zu diesem Zeitpunkt gelöst vorliegenden anorganischen Kaliumsalze beginnen, bei dieser Temperatur auszufallen.

Aufgrund der in den Konzentraten (E1-K) und (E2-K) gelöst vorliegenden anorganischen Salze weisen diese Konzentrate einen Siedepunkt >100°C auf, beispielsweise einen Siedepunkt von >100 bis 115°C. Der Siedepunkt bezieht sich jeweils auf den Siedepunkt bei Atmosphärendruck, d.h. bei 1 bar.

Wenn während der Durchführung von Stufe (f1), insbesondere ausgehend von (E2-K), beobachtet wird, dass - neben anorganischen Natriumsalze, insbesondere Natriumchlorid, - auch die jeweils darin enthaltenen gelöst vorliegenden anorganischen Kaliumsalze beginnen auszufallen, wird vorzugsweise sofort zur Stufe (f2) übergegangen.

Dem Fachmann sind Methoden bekannt, mittels derer bestimmt werden kann, zu welchem Zeitpunkt während der Durchführung von Stufe (f1) die jeweils in (E1-K) und (E2-K) enthaltenen gelöst vorliegenden anorganischen Kaliumsalze beginnen auszufallen. Dieser Zeitpunkt kann mittels induktiv-gekoppelter Plasma-Atom-Emissionspektrometrie (ICP-OES) gemäß DIN EN ISO 11885 (Datum: 1.9.2009) bestimmt werden, wobei der Gehalt an den Elementen Natrium bzw. Kalium einer zu untersuchenden Probe, d.h. einer Probe enthaltend das/die ausgefallenen Salze während der Durchführung von Stufe (f1), ermittelt wird. Diese Probe oder eine Lösung der jeweiligen Probe wird in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Gegenwart bzw. Konzentration des entsprechenden Elements wie Natrium bzw. Kalium. Vor Durchführung der Untersuchung werden anhand von bekannten Elementstandards (Referenzstandards), die in Abhängigkeit von der jeweiligen zu untersuchenden Probe Kalibrierungsmessungen durchgeführt. Anhand dieser Kalibrierungen kann die Gegenwart (oder Nicht-Gegenwart) von Kalium in der Probe bestimmt werden.

Die Stufe (f2) sieht ein
Abfiltrieren der nach Durchführung von Stufe (f1) aus (E2-K) zumindest teilweise ausgefallenen anorganischen Natriumsalze, insbesondere Natriumchlorid, und gegebenenfalls Abfiltrieren der nach Durchführung von Stufe (f1) aus (E1-K) gegebenenfalls zumindest teilweise ausgefallenen anorganischen Natriumsalze, insbesondere Natriumchlorid, bei der vorgenannten Temperatur gemäß Stufe (f1) jeweils unabhängig voneinander unter Erhalt der aus (E2-K) zumindest teilweise ausgefallenen anorganischen Natriumsalze, insbesondere Natriumchlorid, und des Filtrats (E2-K-F) sowie des eingeengten Konzentrates (E1-K) oder der aus (E1-K) zumindest teilweise ausgefallenen anorganischen Natriumsalze, insbesondere Natriumchlorid, und des Filtrats (E1-K-F), vor.

Die während der Durchführung von (f1) aus (E2-K) zumindest teilweise ausgefallenen Salze enthalten im Wesentlichen Natriumchlorid. Vorzugsweise enthalten die gemäß Stufe (f2) abfiltrierten anorganischen Salze, insbesondere die aus (E2-K) ausgefallenen anorganischen Salze Natriumchlorid in einer Menge von wenigstens 85 Gew.-%, besonders bevorzugt von wenigstens 90 Gew.-%, insbesondere von wenigstens 95 Gew.-%, jeweils bezogen auf Gesamtgewicht der abfiltrierten anorganischen Salze. Bei der Durchführung von Stufe (f1) können aus dem eingesetzten Konzentrat (E1-K) anorganische Natriumsalze ausfallen. In diesem Fall werden diese innerhalb der Stufe (f2) abfiltriert und man erhält das Filtrat (E1-K-F). Fallen bei Durchführung von Stufe (f1) keine anorganische Natriumsalze aus, so entfällt Stufe (f2) in diesem Fall und das gemäß Stufe (f1) eingeengte Konzentrat (E1-K) wird direkt in Stufe (f3) eingesetzt.

Die Stufe (f3) sieht ein
Abkühlen des Filtrats (E2-K-F) und Abfiltrieren von dann ausgefallenen anorganischen Kaliumsalzen und Einengen des Filtrats (E1-K-F) oder weiteres Einengen des bereits eingeengten Konzentrates (E1-K), jeweils unter Erhalt der dann aus (E1-K-F) oder aus dem bereits eingeengten Konzentrat (E1-K) ausgefallenen anorganischen Kaliumsalze, vor.

Die Abkühlung gemäß Stufe (f3) im Zusammenhang mit dem Abkühlen des Filtrats (E2-K-F) wird vorzugsweise bei einer Temperatur <35°C, besonders bevorzugt <30°C durchgeführt. Vor bzw. während der Durchführung der Stufe (f3) wird daher auf eine solche Temperatur vorzugsweise abgekühlt.

Das Einengen des Filtrats (E1-K-F) oder weiteres Einengen des (bereits) eingeengten Konzentrates (E1-K) erfolgt in Stufe (f3) unter Erhalt der dann aus (E1-K-F) oder aus dem bereits eingeengten Konzentrat (E1-K) ausgefallenen anorganischen Kaliumsalze. Vorzugsweise wird dieses Einengen bei einer Temperatur im Bereich von 75°C bis zum Siedepunkt des eingeengten Konzentrats (E1-K) oder des Filtrats (E1-K-F) durchgeführt.

Vorzugsweise wird nach der Stufe (f3) aus (E1-K-F) oder aus dem eingeengten Konzentrat (E1-K) Aphthitalit erhalten und aus (E2-K-F) Kaliumchlorid erhalten, vorzugsweise jeweils unabhängig in einer Reinheit im Bereich von 70 bis 95 Gew.-%.

Bei der Durchführung der Stufen (f1) bis (f3) des Schrittes (f) des erfindungsgemäßen Verfahrens und dem Erhalt von Kaliumchlorid aus (E2-K-F) erfolgt dessen Abtrennung mittels des Sylvinit-Verfahrens: dabei kann man nach Durchführung der Stufe (f2) ausnutzen, dass sich Natriumchlorid bei gleichzeitiger Anwesenheit von Kaliumchlorid als Bodensatz bei höherer Temperatur schlechter als bei niedriger Temperatur löst: dadurch bleibt in (E2-K-F) enthaltenes Natriumchlorid beim Abkühlen gemäß Stufe (f3) in Lösung, wohingegen Kaliumchlorid ausfällt.

### Herstellung von in Schritt (b) eingesetzten alkalischen anorganischen Kaliumsalzen

Die nach Schritt (e) erhältlichen und in den Konzentraten (E1-K) und/oder (E2-K) enthaltenen gelösten anorganischen Kaliumsalze und/oder die nach Schritt (f) jeweils erhältlichen anorganischen Kaliumsalze werden zur elektrolytischen Herstellung von den in Schritt (b) verwendeten alkalischen anorganischen Kaliumsalzen eingesetzt.

Vorzugsweise ist diese elektrolytische Herstellung eine Membranelektrolyse, besonders bevorzugt eine Membranelektrolyse, bei der eine Vierkammer-Elektrolysezelle eingesetzt wird. Dadurch kann insbesondere gewährleistet werden, dass die Chlorid-Ionen der in den Konzentraten (E1-K) und/oder (E2-K) enthaltenen gelösten anorganischen Kaliumsalzen und/oder der in den nach Schritt (f) jeweils erhältlichen anorganischen Kaliumsalzen nicht zu Chlor umgesetzt werden.

Vorzugsweise werden bei der elektrolytischen Herstellung von den in Schritt (b) verwendeten alkalischen anorganischen Kaliumsalzen zudem anorganische Säuren wie Salzsäure und/oder Schwefelsäure produziert, die zur Einstellung eines sauren pH-Wertes eingesetzt werden können, beispielsweise zur Einstellung eines sauren pH-Wertes der nach Schritt (c) erhaltenen Mischung (C) oder des nach Schritt (d) erhaltenen Konzentrats (D1) und/oder des nach Schritt (d) erhaltenen Permeats (D2), sollte dies erforderlich sein.

### Optionale Schritte (g), (h) und (i)

Vorzugsweise umfasst das erfindungsgemäße Verfahren wenigstens die weiteren Schritte (g), (h) und (i), nämlich
(g) Behandeln des nach Schritt (e) erhaltenen Diluats (E1-D) mittels Umkehrosmose oder Nanofiltration unter Erhalt des Konzentrats (E1-D-K) und des Permeats (E1-D-P),
(h) Einstellen des pH-Werts des Konzentrate (E1-D-K) durch Zugabe wenigstens einer anorganischen Säure auf einen pH-Wert ≤4 und Abfiltrieren der dann jeweils ausgefallenen Feststoffe unter Erhalt des Filtrats (E1-D-K-F) und
(i) Zuführen des nach Schritt (h) erhaltenen Filtrate (E1-D-K-F) zu dem nach Schritt (d) erhaltenen Konzentrat (D1).

Das nach Schritt (e) erhaltene Diluat (E2-D) kann verworfen werden bzw. abgeleitet werden. Gleiches gilt für das nach Schritt (g) erhaltene Permeat (E1-D-P).

Vorzugsweise ist die in Schritt (h) eingesetzte anorganische Säure ausgewählt aus der Gruppe bestehend aus Salzsäure, Schwefelsäure und Mischungen davon, und die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze werden zur elektrolytischen Herstellung von in Schritt (g) verwendeter anorganischer Säure eingesetzt.

### Optionaler Schritt (j)

Gegebenenfalls können die nach Stufe (f3) jeweils erhaltenen anorganischen Kaliumsalze weiter gereinigt werden, beispielsweise durch ein- oder mehrfache Umkristallisation mittels eines geeigneten Lösemittels wie zum Beispiel Wasser und/oder durch Waschen mit Wasser oder einer Salzlösung wie einer Natriumsalzlösung. Eine solche Umkristallisation und/oder ein solches Waschen stellt/stellen einen optionalen Schritt (j) dar.

### Weitere optionale Schritte

Vorzugsweise wird vor Durchführung des Schrittes (e) vorzugsweise durch Zugabe wenigstens einer anorganischen Säure zur nach Schritt (c) erhaltenen Mischung (C) oder jeweils zum nach Schritt (d) erhaltenem Konzentrat (D1) und zum nach Schritt (d) erhaltenem Permeat (D2) jeweils ein pH-Wert <4 eingestellt, um gegebenenfalls enthaltenes Hydrogencarbonat und/oder Carbonat in Kohlendioxid zu überführen.

Vorzugsweise ist die hierfür eingesetzte anorganische Säure ausgewählt aus der Gruppe bestehend aus Salzsäure, Schwefelsäure und Mischungen davon. Vorzugsweise werden die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze zur elektrolytischen Herstellung der in diesem Schritt verwendeten anorganischen Säuren eingesetzt.

Vorzugsweise wird in keinem Schritt des erfindungsgemäßen Verfahrens irgendein alkalisches Natriumsalz (von außen) zugeführt, insbesondere wird im Schritt (b) kein solches alkalisches Natriumsalz wie Natriumhydroxid eingesetzt.

Die nachfolgenden Beispiele und Vergleichsbeispiele dienen der Erläuterung der Erfindung, sind jedoch nicht einschränkend auszulegen.

### Beispiel und Vergleichsbeispiel

### 1. Vergleichsbeispiel

### Vorreinigungsschritte (a), (b) und (c)

1 m³ Schweinegülle (enthaltend 6 Gew.-% Feststoffe; Bestimmung des Feststoffgehalts gemäß EN 12880) werden einer konventionellen Vorreinigung unterworfen. Dabei wird die Schweinegülle zunächst zentrifugiert, um die darin enthaltenen Feststoffe abzutrennen. Das resultierende Zentrifugat wird mit 10 L wässriger NaOH (40%-ig) alkalisiert und die resultierende Mischung unter Rühren auf 60°C erhitzt. Nachfolgend wird die Mischung einem konventionellen Strippungsschritt in einer üblichen Strippanlage unterworfen, um darin enthaltenen Ammoniak zu entfernen. Die Strippanlage weist einen Durchmesser von 10 cm auf. Der Füllkörper ist so ausgelegt, dass ein Durchsatz von 40 L/h an Flüssigkeit erzielt wird. Der Luftdurchsatz beträgt 4 m³/h. Das Ammoniak-haltige Gas wird zur Abscheidung von Ammoniak-reichem Wasser gekühlt. Das Kondenswasser wird abgetrennt und der restliche Ammoniak in der Luft mit Schwefelsäure ausgewaschen. Anschließend werden 7 L/m³ wässrige Schwefelsäure und hinzugefügt und die resultierende Mischung einer aeroben biologischen Behandlung unterworfen. Die aerobe biologische Behandlung wird als Membran-Bioreaktor betrieben. Teil dieser biologischen Behandlung ist die Durchführung einer Ultrafiltration. Das Permeat der Ultrafiltration wird nachfolgend in Schritt (d) weiter verwertet.

### Schritt (d)

Das erhaltene Ultrafiltrationspermeat wird nachfolgend einer Nanofiltration unterworfen. Diese wird bei 24°C-Permeatstemperatur und einem pH-Wert von ca. pH 7 durchgeführt. Als Nanofiltrationsmembran wird eine handelsübliche Nanofiltrationsmembran (NF-Membran) eingesetzt, die im Wesentlichen durchlässig für einwertige Ionen wie Chlorid-Ionen, Natrium-Ionen und Kalium-Ionen, jedoch im Wesentlichen undurchlässig für zweiwertige Ionen wie Sulfat-Ionen ist. Aufgrund des Donnan-Effektes wird die Durchlässigkeit insbesondere für Chlorid-Ionen zudem weiter erhöht. Die Trenngrenze der eingesetzten NF-Membran liegt bei <200 Dalton. Die NF-Membran ist eine biofilmresistente NF-Membran (BFR-NF-Membran). Die NF-Membran basiert auf Polysulfonen als Trägermaterial, welches mit einem Polyamid beschichtet ist. Es wird eine Nanofiltrationsanlage eingesetzt, die aus drei Einheiten pro Modul, d.h. pro Druckrohr, besteht. Jede Einheit ist ca. 1 m lang und weist einen Durchmesser von ca. 20 cm auf. Jede Einheit hat eine Wirkfläche von ca. 35 m². Nach Durchführung der Nanofiltration werden ein Konzentrat (D1) und ein Permeat (D2) erhalten. Es werden ca. 230 L Konzentrat (D1) und ca. 760 L Permeat (D2) erhalten. In dem Permeat (D2) sind ca. 75% der im eingesetzten Ultrafiltrationspermeats enthaltenen Chlorid-Ionen enthalten. Im Konzentrat (D1) sind ca. 90% der im eingesetzten Ultrafiltrationspermeats enthaltenen Sulfat-Ionen enthalten. Im Konzentrat (D1) und im Permeat (D2) sind ca. jeweils 50% der im eingesetzten Ultrafiltrationspermeats enthaltenen Natrium- und Kalium-Ionen enthalten.

### Schritt (e)

Sowohl das nach Schritt (d) erhaltene Konzentrat (D1) als auch das nach Schritt (d) erhaltene Permeat (D2) werden einer Elektrodialyse unterzogen. Elektrodialyse von (D1) liefert das Konzentrat (E1-K) und das Diluat (E1-D) und Elektrodialyse von (D2) liefert das Konzentrat (E2-K) und das Diluat (E2-D). Das Konzentrat (E1-K) ist durch die Elektrodialyse um ca. den Faktor 3,5 angereichert. Das nach Schritt (d) erhaltene Permeat (D2) wird vor Durchführung der Elektrodialyse zur Aufkonzentrierung einer Umkehrosmose unterworfen. Das dann erhaltene Konzentrat (E2-K) ist durch die Elektrodialyse um ca. den Faktor 12,0 angereichert.

### Schritt (f)

Beim Einengen des Konzentrats (E1-K) (durch Erhitzen auf seinen Siedepunkt) fallen geringe Mengen Natriumchlorid aus, welche in der Hitze bei der Siedetemperatur solange abgetrennt werden können, bis mittels ICP-OES zusätzlich der Ausfall von Kaliumsalzen beobachtet wird. Dann wird abfiltriert und das erhaltene Filtrat auf 20°C abgekühlt, wobei ein Salzgemisch aus Natriumsulfat, Kaliumsulfat, Kaliumchlorid und Glaserit ausfällt. Durch die darin enthaltenen hohen Mengen an Natrium, insbesondere durch die hohe anfallende Menge an Natriumsulfat, ist das erhaltene Salzgemisch *nicht* als Düngemittel brauchbar. Beim Einengen des Konzentrats (E2-K) (durch Erhitzen auf seinen Siedepunkt) fällt Natriumchlorid aus, welches in der Hitze bei der Siedetemperatur solange abgetrennt werden kann, bis mittels ICP-OES zusätzlich der Ausfall von Kaliumchlorid beobachtet wird. Dann wird abfiltriert und das erhaltene Filtrat abgekühlt, wobei Kaliumchlorid ausfällt und erhalten werden kann.

Das Verfahren ist ein kontinuierliches Verfahren. Zur Alkalisierung der vor dem Strippen eingesetzten Mischung wird fortwährend neues Natriumhydroxid zugesetzt.

### 2. Beispiel

Es wird das gleiche Verfahren umfassend die *Schritte (a) bis (e)* ausgehend von 1 m³ der gleichen Schweinegülle durchgeführt wie für das Vergleichsbeispiel unter Punkt **1.** beschrieben. Es wird jedoch vor dem Strippen kein Natriumhydroxid zugegeben, sondern 50 L einer wässrigen Mischung aus Kaliumhydroxid und Natriumhydroxid zugegeben, die ein Mengen-Verhältnis von Kalium- zu Natrium-Ionen von ca. 4:1 aufweist. Diese wässrige Mischung wird durch Elektrolyse der nach Schritt (e) erhaltenen Konzentrate (E1-K) und/oder (E2-K) erhalten, so dass - nach einmaligem Zusatz einer solchen Mischung - die Salzfracht insgesamt nicht weiter erhöht wird: Das nach Durchführung der Elektrodialyse erhaltene Konzentrat (E1-K) weist ein Mengen-Verhältnis von Kalium- zu Natrium-Ionen von ca. 4:1 auf. Ein analoges Verhältnis weist auch das nach Durchführung der Elektrodialyse erhaltene Konzentrat (E2-K) auf. Jedes der nach Schritt (e) erhaltenen Konzentrate (E1-K) und (E2-K) kann somit mittels Membranelektrolyse zu einer Mischung aus Natriumhydroxid und Kaliumhydroxid umgesetzt werden, welche dann wiederum fortwährend zur Alkalisierung der vor dem Strippen eingesetzten Mischung eingesetzt wird (anstelle des ausschließlichen Einsatzes von Natriumhydroxid wie im Vergleichsbeispiel **1.**). Zudem wird vor der biologischen Behandlung anstelle von Schwefelsäure eine Mischung aus Schwefelsäure und Salzsäure eingesetzt.

Das nach Durchführung der Elektrodialyse erhaltene Konzentrat (E1-K) weist zudem ein Mengen-Verhältnis von Chlorid- zu Sulfat-Ionen von ca. 1:2 auf. Das nach Schritt (e) erhaltene Konzentrate (E1-K) kann somit mittels Membranelektrolyse zu einer Mischung aus Salzsäure und Schwefelsäure umgesetzt werden, welche dann wiederum fortwährend zur Neutralisierung der vor der biologischen Behandlung eingesetzten Mischung eingesetzt wird (anstelle des ausschließlichen Einsatzes von Schwefelsäure wie im Vergleichsbeispiel **1.**).

Jedes der nach Schritt (e) erhaltenen Konzentrate (E1-K) und/oder (E2-K) kann zudem mittels Membranelektrolyse zu einer Mischung aus Natriumhydroxid und Kaliumhydroxid umgesetzt werden, welche dann wiederum fortwährend zur Alkalisierung der vor dem Strippen eingesetzten Mischung eingesetzt wird (anstelle des ausschließlichen Einsatzes von Natriumhydroxid wie im Vergleichsbeispiel **1.**).

### Schritt (f)

Beim Einengen des Konzentrats (E1-K) (durch Erhitzen auf seinen Siedepunkt) können bis zur Einengung des Volumens auf 70% seines ursprünglichen Volumens geringe Mengen an Natriumchlorid (ca. 2%, bezogen auf die Gesamtmenge an Kalium-, Natrium-, Chlorid- und Sulfat-Ionen, die in (E1-K) enthalten waren) erhalten und in der Hitze abgetrennt werden und zwar solange, bis mittels ICP-OES zusätzlich der Ausfall von Kaliumsalzen beobachtet wird (Stufe (f1)). Dann werden die geringen Mengen an Natriumchlorid abfiltriert (Stufe (f2)) und das erhaltene Filtrat weiter durch Erhitzen auf seinen Siedepunkt eingeengt, wobei Glaserit ausfällt (Stufe (f3)). Die Ausbeute an Glaserit beträgt ca. 75% (bezogen auf die Gesamtmenge an Kalium-, Natrium-, Chlorid- und Sulfat-Ionen, die in (E1-K) enthalten waren). Die Reinheit des Glaserits beträgt ca. 85%, wobei diese beispielsweise durch Waschen mit Wasser noch weiter gesteigert werden kann. Aus dem nach Schritt (e) erhaltenen Diluat (E1-D) können durch Zugabe von Säure Huminsäure und huminsäureartige Verbindungen (Verunreinigungen (ii)) ausgefällt werden. Das erhaltene Glaserit kann aufgrund des nur geringen Natriumanteils als Düngemittel eingesetzt werden.
Beim Einengen des Konzentrats (E2-K) (durch Erhitzen auf seinen Siedepunkt) fällt Natriumchlorid aus (ca. 20%, bezogen auf die Gesamtmenge an Kalium-, Natrium-, Chlorid- und Sulfat-Ionen, die in (E2-K) enthalten waren), welches in der Hitze bei der Siedetemperatur solange abgetrennt werden kann, bis mittels ICP-OES zusätzlich der Ausfall von Kaliumsalzen beobachtet wird (Stufe (f1)). Dann wird abfiltriert (Stufe (f2)) und das erhaltene Filtrat auf 20°C abgekühlt, wobei Kaliumchlorid ausfällt und erhalten werden kann (Stufe (f3)). Die Ausbeute an Kaliumchlorid beträgt ca. 77% (bezogen auf die Gesamtmenge an Kalium-, Natrium-, Chlorid- und Sulfat-Ionen, die in (E2-K) enthalten waren). Die Reinheit des Kaliumchlorids beträgt ca. 80%, wobei diese beispielsweise durch Waschen mit Wasser noch weiter gesteigert werden kann.

Das Verfahren ist ein kontinuierliches Verfahren. Zur Alkalisierung der vor dem Strippen eingesetzten Mischung wird fortwährend die vorstehend genannte Mischung aus Natriumhydroxid und Kaliumhydroxid (40%-ig) zugegeben, die ein Mengen-Verhältnis von Kalium- zu Natrium-Ionen von ca. 4:1 aufweist. Wie vorstehend erwähnt wird diese aus einer Umsetzung der nach Schritt (e) erhaltenen Konzentrate (E1-K) und/oder (E2-K) Membranelektrolyse erhalten, so dass insgesamt zur Alkalisierung nicht ständig neue Salze zugesetzt werden müssen (die die Salzfracht erhöhen) und zudem auf den ausschließlichen Einsatz von unerwünschter Natronlauge verzichtet werden kann.

### 3. Experimentelle Resultate

### Vergleichsbeispiel zu 1. - Menge an Ionen nach Durchführung einzelner Verfahrensschritte

| *Ionen* | Zentrifugat (a) nach Zentrifugation und vor Alkalisierung | Ultrafiltrationspermeat nach Vorreinigung | Konzentrat (D1) nach Nanofiltration | Konzentrat (E1-K) nach Elektrodialyse |
|---|---|---|---|---|
| Kalium-Ionen [g/L] | 2,0 | 2,0 | 6,0 | 20,0 |
| Natrium-Ionen [g/L] | 0,5 | 3,8 | 12,0 | 44,0 |
| Chlorid-Ionen [g/L] | 1,1 | 1,1 | 2,1 | 7,8 |
| Sulfat-Ionen [g/L] | 2,6 | 7,5 | 29,0 | 95,0 |

### Beispiel zu 2. - Menge an Ionen nach Durchführung einzelner Verfahrensschritte

| *Ionen* | Zentrifugat (a) nach Zentrifugation und vor Alkalisierung | Ultrafiltrationspermeat nach Vorreinigung | Konzentrat (D1) nach Nanofiltration | Konzentrat (E1-K) nach Elektrodialyse |
|---|---|---|---|---|
| Kalium-Ionen [g/L] | 2,08 | 3,99 | 13,14 | 44,69 |
| Natrium-Ionen [g/L] | 0,63 | 1,10 | 3,38 | 11,50 |
| Chlorid-Ionen [g/L] | 1,77 | 2,34 | 4,86 | 17,69 |
| Sulfat-Ionen [g/L] | 2,35 | 3,55 | 13,78 | 38,59 |

## Patentansprüche

1. Ein Verfahren zur Gewinnung von anorganischen Kaliumsalzen aus wenigstens einem einer anaeroben und/oder aeroben Behandlung zumindest teilweise zugänglichen Substrat umfassend wenigstens die Schritte (a), (b), (c), (d), (e) und (f), nämlich
eine Vorreinigung umfassend die Schritte (a), (b) und (c):
(a) Abtrennen von in dem wenigstens einen, einer anaeroben und/oder aeroben Behandlung zumindest teilweise zugänglichen Substrat enthaltenen Feststoffen,
(b) Entfernen von in dem wenigstens einen, einer anaeroben und/oder aeroben Behandlung zumindest teilweise zugänglichen Substrat enthaltenen stickstoffhaltigen Verbindungen mittels Strippen, wobei der pH-Wert des Substrats vor Durchführung des Strippens durch Zugabe wenigstens eines alkalischen anorganischen Kaliumsalzes auf einen pH-Wert > 9 eingestellt wird und
(c) anaerobe und/oder aerobe Behandlung des einer anaeroben und/oder aeroben Behandlung zumindest teilweise zugänglichen Substrats,
wobei die Reihenfolge der Schritte (a), (b) und (c) variabel ist und nach Durchführung dieser Schritte (a), (b) und (c) eine vorgereinigte Mischung (X) erhalten wird,
(d) Behandeln der nach Durchführung der Vorreinigungsschritte (a), (b) und (c) erhaltenen vorgereinigten Mischung (X) mittels Nanofiltration unter Erhalt eines Konzentrats (D1) und eines Permeats (D2),
(e) Behandeln des nach Schritt (d) erhaltenen Konzentrats (D1) mittels Elektrodialyse unter Erhalt eines Konzentrats (E1-K) und eines Diluats (E1-D) und Behandeln des nach Schritt (d) erhaltenen Permeats (D2) mittels Elektrodialyse unter Erhalt eines Konzentrats (E2-K) und eines Diluats (E2-D), und
(f) Behandeln der nach Schritt (e) erhaltenen Konzentrate (E1-K) und (E2-K) nach zumindest teilweisem Einengen der Konzentrate jeweils unabhängig voneinander mittels Kristallisation, wobei Schritt (f) jeweils gegebenenfalls ein- oder mehrfach wiederholt wird, zur Gewinnung von jeweils in den Konzentraten (E1-K) und (E2-K) enthaltenen gelösten anorganischen Kaliumsalzen, die von den in Schritt (b) eingesetzten alkalischen anorganischen Kaliumsalzen verschieden sind,
**dadurch gekennzeichnet, dass** die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze zur elektrolytischen Herstellung von den in Schritt (b) verwendeten alkalischen anorganischen Kaliumsalzen eingesetzt werden.

2. Das Verfahren gemäß Anspruch 1, **dadurch gekennzeichnet, dass** das wenigstens eine, einer anaeroben und/oder aeroben Behandlung zumindest teilweise zugängliche Substrat ausgewählt ist aus der Gruppe bestehend aus Klärschlamm, Gülle, Rückständen aus Biogasanlagen und Mischungen davon.

3. Das Verfahren gemäß Anspruch 1 oder 2, **dadurch gekennzeichnet, dass** es ein kontinuierliches Verfahren ist.

4. Das Verfahren gemäß einem der vorstehenden Ansprüche, **dadurch gekennzeichnet, dass** die in Schritt (c) eingesetzten alkalischen anorganischen Kaliumsalze ausgewählt sind aus der Gruppe bestehend aus Kaliumhydroxid, Kaliumcarbonat, Kaliumhydrogencarbonat und Mischungen davon.

5. Das Verfahren gemäß einem der vorstehenden Ansprüche, **dadurch gekennzeichnet, dass** zur Durchführung gemäß Schritt (d) wenigstens eine Nanofiltrationsmembran eingesetzt wird, die im Wesentlichen durchlässig für einwertige Chlorid-Ionen, jedoch im Wesentlichen undurchlässig für zweiwertige Sulfat-Ionen ist.

6. Das Verfahren gemäß einem der vorstehenden Ansprüche, **dadurch gekennzeichnet, dass** Schritt (d) durch Zugabe wenigstens einer anorganischen Säure bei einem pH-Wert im Bereich von 6 bis 8 durchgeführt wird, wobei die hierfür eingesetzte wenigstens eine anorganische Säure ausgewählt ist aus der Gruppe bestehend aus Salzsäure, Schwefelsäure und Mischungen davon, und wobei die nach Schritt (e) erhältlichen und in den Konzentraten (E1-K) und (E2-K) enthaltenen gelösten anorganischen Kaliumsalze und/oder die nach Schritt (f) jeweils erhältlichen anorganischen Kaliumsalze zur elektrolytischen Herstellung der in diesem Schritt verwendeten anorganischen Säuren eingesetzt werden.

7. Das Verfahren gemäß einem der vorstehenden Ansprüche, **dadurch gekennzeichnet, dass**
im nach Schritt (e) erhaltenen Konzentrat (E1-K) im Wesentlichen Sulfat-Ionen als Anionen sowie Kalium-Ionen und Natrium-Ionen als Kationen enthalten sind, und
im nach Schritt (e) erhaltenen Konzentrat (E2-K) im Wesentlichen Chlorid-Ionen als Anionen sowie Kalium-Ionen und Natrium-Ionen als Kationen enthalten sind.

8. Das Verfahren gemäß einem der vorstehenden Ansprüche, **dadurch gekennzeichnet, dass** die Kristallisation gemäß Schritt (f) jeweils wenigstens drei Stufen (f1), (f2) und (f3) beinhaltet,
(f1) Einengen der nach Schritt (e) erhaltenen Konzentrate (E1-K) und (E2-K) jeweils unabhängig voneinander bei einer Temperatur im Bereich von 75°C bis zum Siedepunkt der Konzentrate (E1-K) und (E2-K), wobei in (E2-K) enthaltenes anorganisches Natriumsalz während der Durchführung von (f1) bei dieser Temperatur zumindest teilweise ausfällt und in (E1-K) enthaltenes anorganisches Natriumsalz während der Durchführung von (f1) bei dieser Temperatur gegebenenfalls zumindest teilweise ausfällt, und wobei die Stufe (f1) solange durchgeführt wird, bis die jeweils darin enthaltenen bis zu diesem Zeitpunkt gelöst vorliegenden anorganischen Kaliumsalze beginnen, bei dieser Temperatur auszufallen,
(f2) Abfiltrieren des nach Durchführung von Stufe (f1) aus (E2-K) zumindest teilweise ausgefallenen anorganischen Natriumsalze und gegebenenfalls Abfiltrieren der gegebenenfalls nach Durchführung von Stufe (f1) aus (E1-K) zumindest teilweise ausgefallenen anorganischen Natriumsalze bei der vorgenannten Temperatur gemäß Stufe (f1) jeweils unabhängig voneinander unter Erhalt der aus (E2-K) zumindest teilweise ausgefallenen anorganischen Natriumsalze und des Filtrats (E2-K-F) sowie des eingeengten Konzentrates (E1-K) oder des aus (E1-K) zumindest teilweise ausgefallenen anorganischen Natriumsalze und des Filtrats (E1-K-F),
(f3) Abkühlen des Filtrats (E2-K-F) und Abfiltrieren von dann ausgefallenen anorganischen Kaliumsalzen und Einengen des Filtrats (E1-K-F) oder weiteres Einengen des bereits eingeengten Konzentrates (E1-K), jeweils unter Erhalt der dann aus (E1-K-F) oder aus dem bereits eingeengten Konzentrat (E1-K) ausgefallenen anorganischen Kaliumsalze.

9. Das Verfahren gemäß Anspruch 8, **dadurch gekennzeichnet, dass** nach Stufe (f3) aus dem Filtrat (E1-K-F) oder aus dem eingeengten Konzentrat (E1-K) Aphthitalit (K₃Na(SO₄)₂) und aus dem Filtrat (E2-K-F) Kaliumchlorid erhalten wird.

10. Das Verfahren gemäß einem der vorstehenden Ansprüche, **dadurch gekennzeichnet, dass** das nach Schritt (d) erhaltene Permeat (D2) vor Durchführung der Elektrodialyse gemäß Schritt (e) einem Schritt (d-1) unterworfen wird, nämlich
(d-1) Behandeln des Permeats (D2) mittels Umkehrosmose unter Erhalt eines Konzentrats (D2-K) und eines Permeats (D2-P), wobei das Konzentrat (D2-K) im nachfolgenden Schritt (e) anstelle des Permeats (D2) eingesetzt wird.

11. Das Verfahren gemäß einem der vorstehenden Ansprüche, **dadurch gekennzeichnet, dass** die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze mittels Membranelektrolyse zur Herstellung von den in Schritt (b) verwendeten alkalischen anorganischen Kaliumsalzen eingesetzt werden.

12. Das Verfahren gemäß einem der vorstehenden Ansprüche, **dadurch gekennzeichnet, dass** es wenigstens die weiteren Schritte (g), (h) und (i) umfasst, nämlich
(g) Behandeln des nach Schritt (e) erhaltenen Diluats (E1-D) mittels Umkehrosmose oder Nanofiltration unter Erhalt des Konzentrats (E1-D-K) und des Permeats (E1-D-P),
(h) Einstellen des pH-Werts des Konzentrate (E1-D-K) durch Zugabe wenigstens einer anorganischen Säure auf einen pH-Wert ≤4 und Abfiltrieren der dann jeweils ausgefallenen Feststoffe unter Erhalt des Filtrats (E1-D-K-F) und
(i) Zuführen des nach Schritt (h) erhaltenen Filtrate (E1-D-K-F) zu dem nach Schritt (d) erhaltenen Konzentrat (D1).

13. Das Verfahren gemäß Anspruch 12, **dadurch gekennzeichnet, dass** die in Schritt (h) eingesetzte anorganische Säure ausgewählt ist aus der Gruppe bestehend aus Salzsäure, Schwefelsäure und Mischungen davon, und dass die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze zur elektrolytischen Herstellung von in Schritt (h) verwendeter anorganischer Säure eingesetzt werden.

14. Das Verfahren gemäß einem der vorstehenden Ansprüche, **dadurch gekennzeichnet, dass** vor Durchführung des Schrittes (e) durch Zugabe wenigstens einer anorganischen Säure zur nach Schritt (c) erhaltenen Mischung (C) oder zum nach Schritt (d) erhaltenem Konzentrat (D1) und zum nach Schritt (d) erhaltenem Permeat (D2) jeweils ein pH-Wert <4 eingestellt wird, um gegebenenfalls enthaltenes Hydrogencarbonat und/oder Carbonat in Kohlendioxid zu überführen.

15. Das Verfahren gemäß Anspruch 14, **dadurch gekennzeichnet, dass** die wenigstens eine eingesetzte anorganische Säure ausgewählt ist aus der Gruppe bestehend aus Salzsäure, Schwefelsäure und Mischungen davon, und dass die nach Schritt (e) erhältlichen und in den Konzentraten (E1-K) und/oder (E2-K) enthaltenen anorganischen Kaliumsalze und/oder die nach Schritt (f) jeweils erhältlichen anorganischen Kaliumsalze zur elektrolytischen Herstellung dieser wenigstens einen anorganischen Säure eingesetzt werden.

## Claims

1. A process for recovering inorganic potassium salts from at least one substrate that is at least partially accessible to an anaerobic and/or aerobic treatment, the process comprising at least the following steps (a), (b), (c), (d), (e) and (f), i.e.,
a preliminary cleaning comprising the steps (a), (b) and (c):
(a) separating solids contained in the at least one substrate that is at least partially accessible to an anaerobic and/or aerobic treatment,
(b) removing, by means of stripping, nitrogenous compounds contained in the at least one substrate that is at least partially accessible to an anaerobic and/or aerobic treatment, wherein before performing the stripping the pH value of the substrate is set to a pH value > 9 by addition of at least one inorganic alkaline potassium salt, and
(c) anaerobically and/or aerobically treating the substrate that is at least partially accessible to an anaerobic and/or aerobic treatment,
wherein the order of the steps (a), (b) and (c) is variable, and a pre-cleaned mixture (X) is obtained after performing these steps (a), (b) and (c),
(d) treating the pre-cleaned mixture (X) obtained after performing the preliminary cleaning steps (a), (b) and (c) by means of nanofiltration, thus obtaining a concentrate (D1) and a permeate (D2),
(e) treating the concentrate (D1) obtained according to step (d) by means of electrodialysis, thus obtaining a concentrate (E1-K) and a diluate (E1-D), and treating the permeate (D2) obtained according to step (d) by means of electrodialysis, thus obtaining a concentrate (E2-K) and a diluate (E2-D), and
(f) treating the concentrates (E1-K) and (E2-K) obtained according to step (e) after at least partially reducing the concentrates in each case independently of one another by means of crystallization, wherein step (f) is optionally repeated once or several times in each case, in order to recover inorganic potassium salts respectively contained in the concentrates (E1-K) and (E2-K) that are different from the inorganic alkaline potassium salts used in step (b),
**characterised in that** the inorganic potassium salts obtainable according to step (e) and contained in the concentrates (E1-K) and/or (E2-K) and/or the inorganic potassium salts respectively obtainable according to step (f) are used for the electrolytic production of the inorganic alkaline potassium salts used in step (b).

2. The method according to claim 1, **characterised in that** the at least one substrate that is at least partially accessible to an anaerobic and/or aerobic treatment is selected from the group consisting of sewage sludge, liquid manure, residues from biogas plants and mixtures thereof.

3. The method according to claim 1 or 2, **characterised in that** it is a continuous method.

4. The method according to any one of the preceding claims, **characterised in that** the inorganic alkaline potassium salts used in step (c) are selected from the group consisting of potassium hydroxide, potassium carbonate, potassium hydrogen carbonate and mixtures thereof.

5. The method according to any one of the preceding claims, **characterised in that** at least one nanofiltration membrane is used for performing step (d), the membrane being substantially permeable for monovalent chloride ions, but substantially impermeable for divalent sulfate ions.

6. The method according to any one of the preceding claims, **characterised in that** step (d) is performed by addition of at least one inorganic acid at a pH value in the range of 6 to 8, wherein the at least one inorganic acid used for this purpose is selected from the group consisting of hydrochloric acid, sulfuric acid and mixtures thereof, and wherein the dissolved inorganic potassium salts obtainable according to step (e) and contained in the concentrates (E1-K) and/or (E2-K) and/or the inorganic potassium salts respectively obtainable according to step (f) are used for the electrolytic production of the inorganic acids used in this step.

7. The method according to any one of the preceding claims, **characterised in that**
in the concentrate (E1-K) obtained according to step (e), substantially sulfate ions are contained as anions and potassium ions and sodium ions as cations, and
in the concentrate (E2-K) obtained according to step (e), substantially chloride ions are contained as anions and potassium ions and sodium ions as cations.

8. The method according to any one of the preceding claims, **characterised in that** the crystallization according to step (f) in each case comprises at least three stages (f1), (f2) and (f3),
(f1) reducing the concentrates (E1-K) and (E2-K) obtained according to step (e), in each case independently of one another, at a temperature in the range from 75 °C to the boiling point of the concentrates (E1-K) and (E2-K), wherein inorganic sodium salt contained in (E2-K) at least partially precipitates at this temperature during performing (f1), and inorganic sodium salt contained in (E1 -K) optionally precipitates at least partially at this temperature during performing (f1), and wherein stage (f1) is performed until the potassium salts respectively contained therein that are dissolved until that time begin to precipitate at that temperature,
(f2) filtering out the inorganic sodium salts at least partially precipitated from (E2-K) after performing stage (f1), and optionally filtering out the inorganic sodium salts at least partially precipitated from (E1-K) after performing stage (f1) at said temperature according to stage (f1), in each case independently of one another, thus obtaining the inorganic sodium salts at least partially precipitated from (E2-K), the filtrate (E2-K-F) as well as the reduced concentrate (E1-K), or the inorganic sodium salts at least partially precipitated from (E1-K) and the filtrate (E1-K-F),
(f3) cooling the filtrate (E2-K-F) and filtering out thus precipitated inorganic potassium salts, and reducing the filtrate (E1-K-F), or further reducing the already reduced concentrate (E1-K), in each case obtaining inorganic potassium salts thus precipitated from (E1-K-F) or from the already reduced concentrate (E1-K).

9. The method according to claim 8, **characterised in that** after stage (f3) aphthitalite (K₃Na(SO₄)₂) is obtained from the filtrate (E1-K-F) or from the reduced concentrate (E1-K) and potassium chloride from the filtrate (E2-K-F).

10. The method according to any one of the preceding claims, **characterised in that** the permeate (D2) obtained according to step (d) is subjected to a step (d-1) before performing the electrodialysis according to step (e), i.e.,
(d-1) treating the permeate (D2) by means of reverse osmosis, thus obtaining a concentrate (D2-K) and a permeate (D2-P), wherein the concentrate (D2-K) is used in the subsequent step (e) instead of the permeate (D2).

11. The method according to any one of the preceding claims, **characterised in that** the inorganic potassium salts obtainable according to step (e) and contained in the concentrates (E1-K) and/or (E2-K) and/or the inorganic potassium salts respectively obtainable according to step (f) are used for the electrolytic production of the inorganic alkaline potassium salts used in step (b) by means of membrane electrolysis.

12. The method according to any one of the preceding claims, **characterised in that** it comprises at least the additional steps (g), (h) and (i), i.e.,
(g) treating the diluate (E1-D) obtained according to step (e) by means of reverse osmosis or nanofiltration, thus obtaining the concentrate (E1-D-K) and the permeate (E1-D-P),
(h) adjusting the pH value of the concentrate (E1-D-K) by addition of at least one inorganic acid to a pH value ≤ 4, and filtering out the solids thereby precipitated respectively, thus obtaining the filtrate (E1-D-K-F) and
(i) feeding the filtrate (E1-D-K-F) obtained according to step (h) to the concentrate (D1) obtained according to step (d).

13. The method according to claim 12, **characterised in that** the inorganic acid used in step (h) is selected from the group consisting of hydrochloric acid, sulfuric acid and mixtures thereof, and that the inorganic potassium salts obtainable according to step (e) and contained in the concentrates (E1-K) and/or (E2-K) and/or the inorganic potassium salts respectively obtainable according to step (f) are used for the electrolytic production of inorganic acid used in step (h).

14. The method according to any one of the preceding claims, **characterised in that** a pH value < 4 is adjusted in each case before performing step (e), by adding at least one inorganic acid to the mixture (C) obtained according to step (c) or to the concentrate (D1) obtained according to step (d) and to the permeate (D2) obtained according to step (d), in order to convert optionally contained hydrogen carbonate and/or carbonate to carbon dioxide.

15. The method according to claim 14, **characterised in that** the at least one inorganic acid used is selected from the group consisting of hydrochloric acid, sulfuric acid and mixtures thereof, and that the inorganic potassium salts obtainable according to step (e) and contained in the concentrates (E1-K) and/or (E2-K) and/or the inorganic potassium salts respectively obtainable according to step (f) are used for the electrolytic production of this at least one inorganic acid.

## Revendications

1. Procédé pour la récupération des sels inorganiques de potassium à partir d'au moins un substrat au moins partiellement accessible à un traitement anaérobie ou aérobie, le procédé comportant au moins les étapes (a), (b), (c), (d), (e) et (f) consistant à :
un nettoyage préalable comportant les étapes (a), (b) et (c) consistant à :
(a) séparer des solides contenus dans l'au moins un substrat au moins partiellement accessible à un traitement anaérobie ou aérobie,
(b) enlever des composés contenant de l'azote contenus dans l'au moins un substrat au moins partiellement accessible à un traitement anaérobie ou aérobie par décapage, dans lequel le pH du substrat est ajusté à un valeur pH > 9 avant le décapage en ajoutant d'au moins un sel alcalin et inorganique de potassium, et
(c) traiter de manière anaérobie ou aérobie le substrat au moins partiellement accessible à un traitement anaérobie et/ou aérobie,
dans lequel l'ordre des étapes (a), (b) et (c) est variable, et on obtient un mélange pré-nettoyé (X) après l'exécution de ces étapes (a), (b) et (c),
(d) traiter le mélange (X) pré-nettoyé obtenu après l'exécution des étapes de nettoyage préalable (a), (b) et (c) par nanofiltration, pour obtenir un concentré (D1) et un perméat (D2),
(e) traiter le concentré (D1) obtenu selon l'étape (d) par électrodialyse, en obtenant un concentré (E1-K) et un diluat (E1-D), et traiter le perméat (D2) obtenu selon l'étape (d) par électrodialyse en obtenant un concentré (E2-K) et un diluat (E2-D), et
(f) traiter les concentrés (E1-K) et (E2-K) obtenus selon l'étape (e), après la réduction d'au moins partielle des concentrés, indépendemmant l'un de l'autre respectivement par cristallisation, dans lequel l'étape (f) est optionnellement répétée dans chaque cas une ou plusieurs fois, pour récuperer des sels de potassium inorganiques dissous respectivement contenus dans les concentrés (E1-K) et (E2-K) qui sont différents des sels de potassium inorganiques et alcalins utilisés dans l'étape (b),
**caractérisé en ce que** les sels de potassium obtenables selon l'étape (e) et contenus dans les concentrés (E1-K) et/ou (E2-K), et/ou les sels de potassium inorganiques respectivement obtenables selon l'étape (f) sont utilisés pour la production électrolytique des sels de potassium alcalins et inorganiques utilisés dans l'étape (b).

2. Procédé selon la revendication 1, **caractérisé en ce que** l'au moins un substrat au moins partiellement accessible à un traitement anaérobie ou aérobie est choisi dans le groupe consistant en boues d'épuration, lisier, résidus d'usines de biogaz et leurs mélanges.

3. Procédé selon la revendication 1 ou 2, **caractérisé en ce qu'**il est un procédé continu.

4. Procédé selon l'une des revendications précédentes, **caractérisé en ce que** les sels de potassium inorganiques et alcalins utilisés dans l'étape (c) sont choisis dans le groupe consistant en hydroxyde de potassium, carbonate de potassium, hydrogénocarbonate de potassium et leurs mélanges.

5. Procédé selon l'une des revendications précédentes, **caractérisé en ce qu'**au moins une membrane de nanofiltration est utilisée pour la mise en oeuvre selon l'étape (d), la membrane étant sensiblement perméable aux ions chlorure monovalents, mais sensiblement imperméable aux ions sulfate divalents.

6. Procédé selon l'une des revendications précédentes, **caractérisé en ce que** l'étape (d) est réalisée par addition d'au moins un acide inorganique à une valeur pH comprise entre 6 et 8, l'au moins un acide inorganique utilisé à cette fin étant choisi dans le groupe constitué par l'acide chlorhydrique, l'acide sulfurique et leurs mélanges, et dans lequel les sels de potassium inorganiques obtenables selon l'étape (e) et contenus dans les concentrés (E1-K) et/ou (E2-K), et/ou les sels de potassium inorganiques respectivement obtenables selon l'étape (f) sont utilisés pour la production électrolytique des acides inorganiques utilisés dans cette étape.

7. Procédé selon l'une des revendications précédentes, **caractérisé en ce que**
le concentré (E1-K) obtenu selon l'étape (e) contient sensiblement des ions sulfate en tant qu'anions et des ions potassium et des ions sodium en tant que cations, et
le concentré (E2-K) obtenu selon l'étape (e) contient sensiblement des ions chlorure en tant qu'anions et des ions potassium et des ions sodium en tant que cations.

8. Procédé selon l'une des revendications précédentes, **caractérisé en ce que** la cristallisation selon l'étape (f) comprend au moins trois phases (f1), (f2) et (f3) consistant à
(f1) réduire des concentrés (E1-K) et (E2-K) obtenus selon l'étape (e), en chaque cas indépendamment l'un de l'autre, à une température dans la rangée de 75 °C jusqu'au point d'ébullition des concentrés (E1-K) et (E2-K), dans lequel le sel de sodium inorganique contenu dans (E2-K) au moins partiellement précipite à cette température pendant la mise en oeuvre de (f1), et le sel de sodium inorganique contenu dans (E1 -K) au moins partiellement précipite le cas échéant à cette température pendant la mise en oeuvre de (f1), et dans lequel la phase (f1) est mise en oeuvre jusqu'à ce que les sels de potassium inorganiques contenus dans celle-ci, qui sont dissous jusqu'à ce moment, commencent à précipiter à cette température,
(f2) filtrer les sels de sodium inorganiques au moins partiellement précipités de (E2-K) après mise en oeuvre de la phase (f1), et le cas échéant filtrer les sels de sodium inorganiques le cas échéant au moins partiellement précipités de (E1-K) après mise en oeuvre de la phase (f1), à la température précitée selon la phase (f1), en chaque cas indépendamment l'un de l'autre, en obtenant les sels de sodium inorganiques au moins partiellement précipités de (E2-K) et le filtrat (E2-K-F), et le concentré réduit (E1-K) ou les sels de sodium inorganiques au moins partiellement précipités de (E1 - K) et le filtrat (E1-K-F),
(f3) refroidir le filtrat (E2-K-F) et filtrer des sels de potassium inorganiques ainsi précipités, et réduire le filtrat (E1-K-F), ou en outre réduire le filtrat (E1-K) déjà réduit, en obtenant, en chaque cas, des sels de potassium inorganiques ainsi précipités de (E1-K-F) ou du concentré (E1-K) déjà réduit.

9. Procédé selon la revendication 8, **caractérisé en ce qu'**on obtient, après la phase (f3), de l'aphthitalite (K₃Na(SO₄)₂) à partir du filtrat (E1-K-F) ou du concentré (E1-K) déjà réduit, et du chlorure de potassium à partir du filtrat (E2-K-F).

10. Procédé selon l'une des revendications précédentes, **caractérisé en ce que** le perméat (D2) obtenu selon l'étape (d) est soumis à une étape (d-1) avant la mise en oeuvre de l'électrodialyse selon l'étape (e), l'étape (d-1) consistant à
(d-1) traiter le perméat (D2) au moyen de l'osmose inverse, en obtenant un concentré (D2-K) et un perméat (D2-P), le concentré (D2-K) étant utilisé dans l'étape (e) suivante à la place du perméat (D2).

11. Procédé selon l'une des revendications précédentes, **caractérisé en ce que** les sels de potassium inorganiques obtenables selon l'étape (e) et contenus dans les concentrés (E1-K) et/ou (E2-K), et/ou les sels de potassium inorganiques respectivement obtenables selon l'étape (f) sont utilisés pour la production des sels de potassium alcalins et inorganiques utilisés dans l'étape (b) au moyen de l'électrolyse par membrane.

12. Procédé selon l'une des revendications précédentes, **caractérisé en ce qu'**il comprend au moins les étapes additionnelles (g), (h) et (i), consistant à
(g) traiter le diluat (E1-D) obtenu selon l'étape (e) au moyen de l'osmose inverse ou de la nanofiltration, en obtenant le concentré (E1-D-K) et le perméat (E1-D-P),
(h) régler le pH du concentré (E1-D-K) à une valeur pH ≤ 4 par addition d'au moins un acide inorganique, et filtrer les solides le cas échéant précipités ainsi, en obtenant le filtrat (E1-D-K-F), et
(i) alimenter le filtrat (E1 -D-K-F) obtenus selon l'étape (h) au concentré (D1) obtenu selon l'étape (d).

13. Procédé selon la revendication 12, **caractérisé en ce que** l'acide inorganique utilisé dans l'étape (h) est choisi dans le groupe consistant en l'acide chlorhydrique, l'acide sulfurique et leurs mélanges, et **en ce que** les sels de potassium inorganiques obtenables selon l'étape (e) et contenus dans les concentrés (E1-K) et/ou (E2-K), et/ou les sels de potassium inorganiques respectivement obtenables selon l'étape (f) sont utilisés pour la production électrolytique de l'acide inorganique utilisé dans l'étape (h).

14. Procédé selon l'une des revendications précédentes, **caractérisé en ce qu'**avant la mise en oeuvre de l'étape (e), un pH < 4 est réglé par addition d'au moins un acide inorganique respectivement au mélange (C) obtenu selon l'étape (c) ou au concentré (D1) obtenu selon l'étape (d) et au perméat (D2) obtenu selon l'étape (d), pour convertir de l'hydrogénocarbonate et/ou carbonate le cas échéant contenu en dioxyde de carbone.

15. Procédé selon la revendication 14, **caractérisé en ce que** l'au moins un acide inorganique utilisé est choisi dans le groupe consistant en l'acide chlorhydrique, l'acide sulfurique et leurs mélanges, et **en ce que** les sels de potassium inorganiques obtenables selon l'étape (e) et contenus dans les concentrés (E1-K) et/ou (E2-K), et/ou les sels de potassium inorganiques respectivement obtenables selon l'étape (f) sont utilisés pour la production électrolytique de cet au moins un acide inorganique.
